# EUROPEAN PATENT APPLICATION

(11) **EP 2 463 753 A1**
(43) Date of publication of application: **13.06.2012**
(21) Application number: 10806549.1
(22) Date of filing: 06.08.2010
(51) Int. Cl.: G06F 3/02, H01H 13/02

(54) **KEYBOARD DEVICE**

(30) Priority: 07.08.2009 JP 2009184554; 11.09.2009 JP 2009210680; 17.09.2009 JP 2009216109
(71) Applicant: Fujikura, Ltd., Tokyo 135-8512 (JP)
(72) Inventor: TAKEUCHI, Eriko, Sakura-shi Chiba 285-8550 (JP); ONO, Yasushi, Sakura-shi Chiba 285-8550 (JP); OHYAMA, Masaki, Sakura-shi Chiba 285-8550 (JP); KAMEYAMA, Daisuke, Sakura-shi Chiba 285-8550 (JP)
(74) Representative: TER MEER - STEINMEISTER & PARTNER GbR
(86) International application number: PCT/JP2010/063376
(87) International publication number: WO 2011/016550

(57) **Abstract**

A keyboard apparatus is provided which allows the brightness of illumination within keytops to be improved. Keyboard apparatus 1 comprises membrane board 50 having contact points 511 and 521, holding plate 20 holding keytops 10 such that the keytops 10 are capable of approaching and leaving the membrane board 50 at a position facing the contact points 511 and 521, and light guide plate 40 having light guiding ability and guiding light to the keytops 10, and rubber domes 35 having light guiding ability and biasing the keytops 10 in a leaving direction from the membrane board 50, wherein the light guide plate 40 is located at a nearer side to the keytops 10 than the membrane board 50.

## Description

### BACKGROUND OF THE INVENTION

### 1. Technical Field of the Invention

The present invention relates to a keyboard apparatus having an illumination function to be used in a notebook sized personal computer or a desktop type personal computer.

It is to be noted that, for those designated countries which permit the incorporation by reference, the contents described and/or illustrated in the documents relevant to International Patent Application No. PCT/JP2010/063376 filed on August 6, 2010, Japanese Patent Application No. 2009-184554 filed on August 7, 2009, Japanese Patent Application No. 2009-210680 filed on September 11, 2009, and Japanese Patent Application No. 2009-216109 filed on September 17, 2009 will be incorporated by reference herein in their entirety, as a part of the description and/or drawings of the present application.

### 2. Description of the Related Art

As a keyboard having keys visible in the darkness, a keyboard is known in which keytops are illuminated via a light guide plate (for example, refer to Patent Document 1: Japanese Published Patent Application No. 2002-260478).

In the above keyboard apparatus, light diffused from the light guide plate is guided to keytops via a board for holding the keytops or a membrane board, and therefore the brightness of illumination within the keytops are low.

Problems to be solved by the present invention or objects of the present invention include providing a keyboard apparatus capable of improving the brightness of illumination within the keytops.

### SUMMARY OF THE INVENTION

The present invention is a keyboard apparatus comprising: a circuit board having a contact point; a holding plate holding a keytop such that the keytop is capable of approaching and leaving the circuit board at a position facing the contact point; a light guide plate having light guiding ability and guiding light to the keytop; and a biasing member having light guiding ability and biasing the keytop in a leaving direction from the circuit board, wherein the keyboard apparatus is **characterized in that** the light guide plate is located between the holding plate and the circuit board and at a nearer side to the keytop than the circuit board.

In the above invention, the keyboard apparatus is **characterized in that** the circuit board has: a first sheet formed thereon with a first contact point, the light guiding plate being directly stacked on the first sheet; a second sheet formed thereon with a second contact point facing the first contact point via a predetermined spacing; and a spacer stacked between the first sheet and the second sheet, and that the first sheet is comprised of white colored polyethylene terephthalate or white colored polyethylene naphthalate.

The present invention solves the above problems by a keyboard apparatus comprising: a circuit board having a contact point; a holding plate holding a keytop such that the keytop is capable of approaching and leaving the circuit board at a position facing the contact point; a light guide plate having light guiding ability and guiding light from a light source to the keytop; and a biasing member having light guiding ability and biasing the keytop in a leaving direction from the circuit board, wherein the light guide plate is located between the holding plate and the circuit board and at a nearer side to the keytop than the circuit board, and the circuit board has a roughened area where at least a part of a main surface facing the light guide plate is roughened.

In the above invention, the circuit board may have: a first sheet formed thereon with a first contact point, the light guiding plate being directly stacked on the first sheet; a second sheet formed thereon with a second contact point facing the first contact point via a predetermined spacing; and a spacer stacked between the first sheet and the second sheet, and the first sheet may be comprised of white colored polyethylene terephthalate or white colored polyethylene naphthalate and may have a roughened area where at least a part of a main surface facing the light guide plate is roughened.

In the above invention, the roughened area may be formed on at least a part of an area facing the biasing member.

In the above invention, the roughened area may be roughened by a dot pattern printed using transparent or white color ink.

In the above invention, the roughened area may be roughened by a mat pattern printed using white color ink.

In the above invention, the keyboard apparatus is **characterized in that** the light guide plate is comprised of a material having Young's modulus of 1000 [MPa] or less.

In the above invention, the keyboard apparatus is **characterized in that** the light guide plate is comprised of urethane-based resin or silicone-based resin.

In the above invention, the keyboard apparatus is **characterized in that** the biasing member is directly attached to the light guide plate.

In the above invention, the keyboard apparatus is **characterized in that** refractive index of the biasing member is relatively higher than refractive index of the light guide plate.

In the above invention, the keyboard apparatus is **characterized in that** the biasing member is comprised of silicone-based resin.

In the above invention, the keyboard apparatus is **characterized in that** the biasing member is attached to the light guide plate by an adhesive having a refractive index not less than refractive index of the light guide plate and not more than refractive index of the biasing member.

In the above invention, the keyboard apparatus is **characterized in that** the holding plate holds the keytop via a link mechanism.

The present invention solves the above problems by a keyboard apparatus comprising: a circuit board having a first sheet of which one main surface is formed thereon with a first contact point, a second sheet formed thereon with a second contact point facing the first contact point via a predetermined spacing, and a spacer stacked between the first sheet and the second sheet; a holding plate stacked on other main surface of the first sheet and holding a keytop such that the keytop is capable of approaching and leaving the circuit board at a position facing the contact points; a biasing member having light guiding ability and biasing the keytop in a leaving direction from the circuit board; and a light source provided to the circuit board for lighting the keytop, wherein the first sheet or the second sheet involves light guiding ability for guiding light emitted from the light source to the keytop from a light introducing portion.

In the above invention, the first sheet may be comprised of a material involving light guiding ability for guiding light emitted from the light source to the keytop, and the second sheet and/or the spacer may be comprised of white colored polyethylene terephthalate or white colored polyethylene naphthalate.

In the above invention, the first sheet involving the light guiding ability may be comprised of a material having Young's modulus of 1000 [MPa] or less.

In the above invention, the first sheet involving the light guiding ability may be comprised of urethane-based resin or silicone-based resin.

In the above invention, the biasing member may be configured to be directly attached to the first sheet.

In the above invention, refractive index of the biasing member may be relatively higher than refractive index of the first sheet.

In the above invention, the second sheet may be comprised of a material involving light guiding ability for guiding light emitted from the light source to the keytop, and the first sheet and/or the spacer may be comprised of transparent polyethylene terephthalate or transparent polyethylene naphthalate.

Note that the second sheet may be comprised of polycarbonate or acrylic-based resin.

In the above invention, the holding plate may be configured to hold the keytop via a link mechanism.

According to the present invention, the light guide plate is located between the holding plate and the circuit board and at a nearer side to the keytop than the circuit board, and therefore the brightness of illumination of the keytop is allowed to be improved.
Moreover, according to the present invention, light guiding ability is involved in the first sheet or the second sheet of the circuit board, on which the contact point is formed and the holding plate is stacked, and therefore the brightness of illumination of the keytop may be improved while reducing the thickness of the keyboard apparatus.

### BRIEF DESCRIPTION OF DRAWINGS

FIG. 1 is a cross-sectional view illustrating the overall configuration of a keyboard apparatus according to the first embodiment of the present invention;
FIG. 2 is a plan view illustrating keytops in the first embodiment of the present invention;
FIG. 3 is a plan view illustrating the keytops shown in FIG. 2 when illuminated in the darkness;
FIG. 4 is an enlarged cross-sectional view illustrating IV section of FIG. 1;
FIG. 5 is an enlarged cross-sectional view illustrating a keyboard apparatus according to the second embodiment of the present invention;
FIG. 6 is an enlarged cross-sectional view illustrating a keyboard apparatus according to the third embodiment of the present invention;
FIG. 7 is a photograph presenting the brightness distribution monitoring result in Sample 1;
FIG. 8 is a photograph presenting spots which are set in the brightness distribution monitoring result shown in FIG. 7;
FIG. 9 is a photograph presenting the brightness distribution monitoring result in Sample 2;
FIG. 10 is a first enlarged cross-sectional view illustrating IV section of FIG. 1;
FIG. 11 is a second enlarged cross-sectional view illustrating IV section of FIG. 1;
FIG. 12 is a third enlarged cross-sectional view illustrating IV section of FIG. 1;
FIG. 13 is an enlarged cross-sectional view illustrating a keyboard apparatus according to the fifth embodiment of the present invention;
FIG. 14 is an enlarged cross-sectional view illustrating a keyboard apparatus according to the sixth embodiment of the present invention;
FIG. 15 is an enlarged cross-sectional view illustrating a keyboard apparatus according to the seventh embodiment of the present invention;
FIG. 16 is a plan view illustrating keytops in the seventh embodiment of the present invention;
FIG. 17 is a plan view illustrating the keytops shown in FIG. 16 when illuminated in the darkness;
FIG. 18 is a first enlarged cross-sectional view illustrating IV section of FIG. 15;
FIG. 19 is a second enlarged cross-sectional view illustrating IV section of FIG. 15;
FIG. 20 is a third enlarged cross-sectional view illustrating IV section of FIG. 15;
FIG. 21 is a fourth enlarged cross-sectional view illustrating IV section of FIG. 15;
FIG. 22 is an enlarged cross-sectional view illustrating a keyboard apparatus according to the eighth embodiment of the present invention;
FIG. 23 is an enlarged cross-sectional view illustrating a keyboard apparatus according to the ninth embodiment of the present invention;
FIG. 24 is a photograph presenting the brightness distribution monitoring result in Sample 41;
FIG. 25 is a photograph presenting spots which are set in the brightness distribution monitoring result shown in FIG. 24;
FIG. 26 is a photograph presenting the brightness distribution monitoring result in Sample 42;
FIG. 27 is a photograph presenting the brightness distribution monitoring result in Sample 60; and
FIG. 28 is a photograph presenting the brightness distribution monitoring result in Sample 61.

### DESCRIPTION OF THE PREFERRED EMBODIMENT

Hereinafter, embodiments according to the present invention will be described with reference to the drawings.

### «First Embodiment»

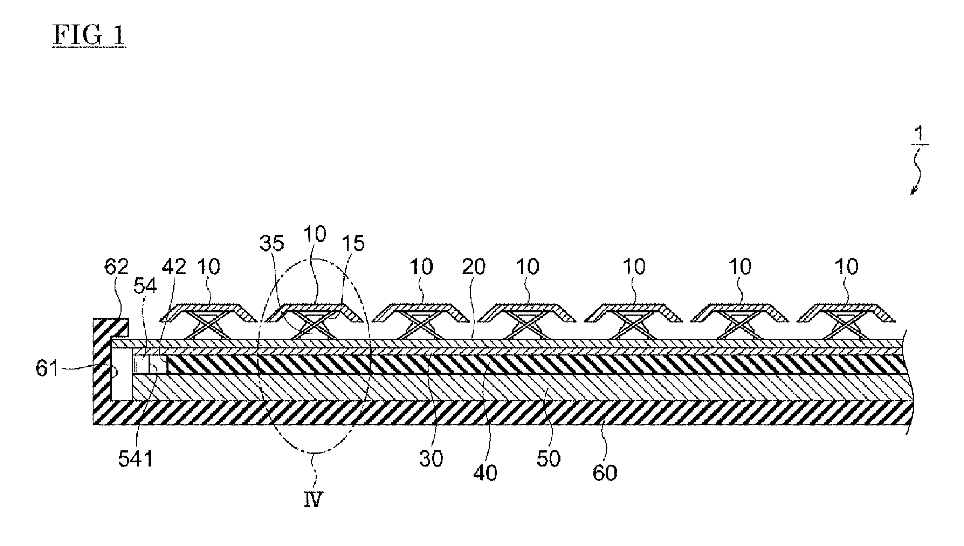

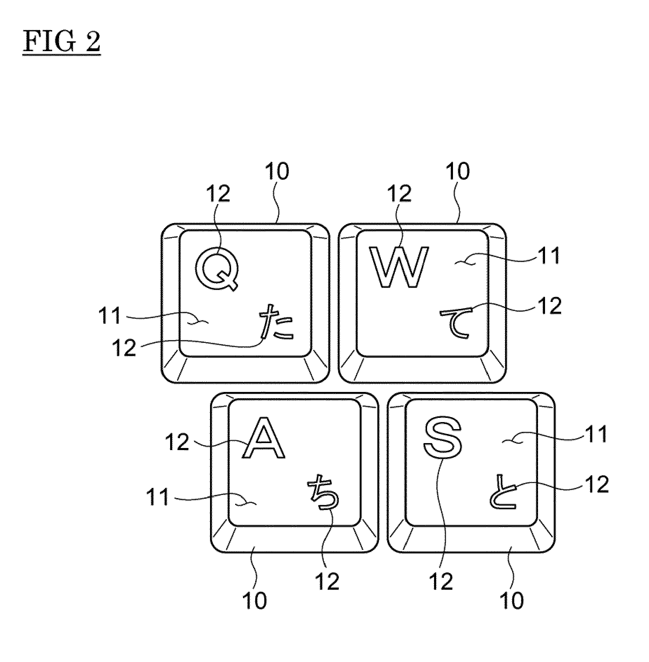

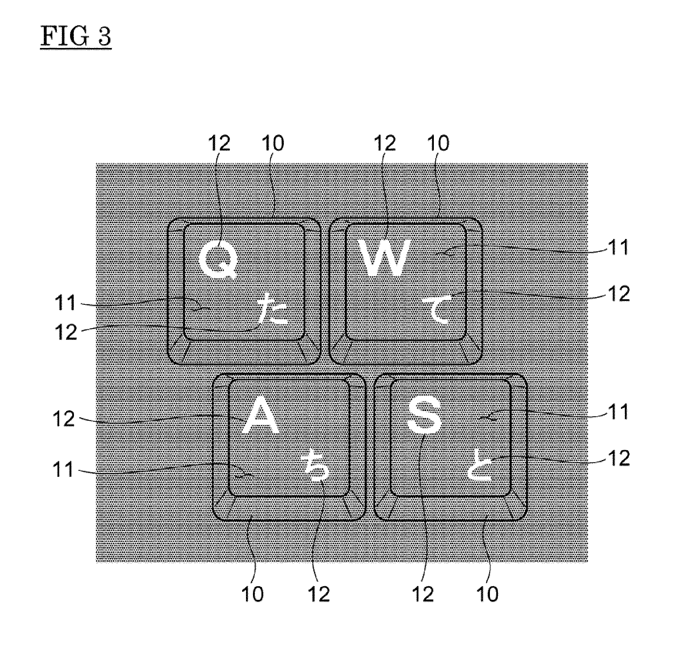

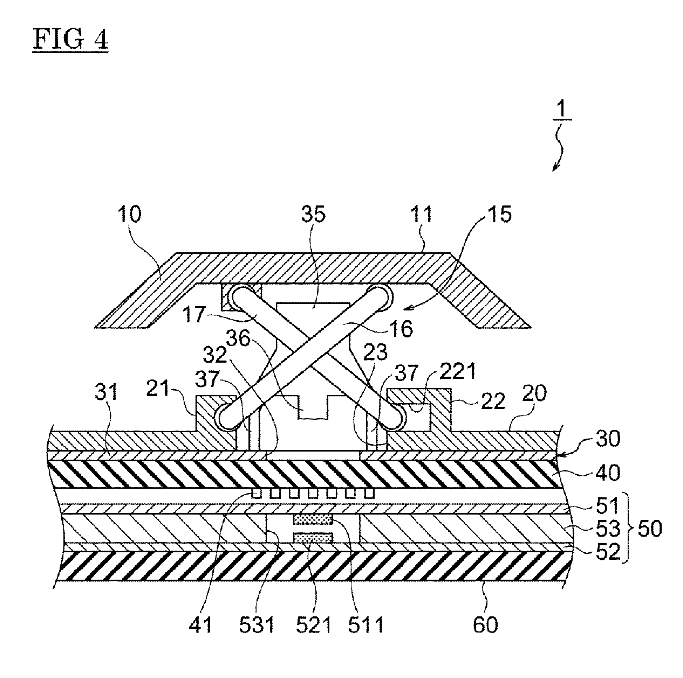

FIG. 1 is a cross-sectional view illustrating the overall configuration of a keyboard apparatus according to the present embodiment, FIG. 2 and FIG. 3 are plan views illustrating keytops in the present embodiment, and FIG. 4 is an enlarged cross-sectional view illustrating IV section of FIG. 1.

Keyboard apparatus 1 according to the present embodiment is a keyboard to be used for a notebook sized personal computer or the like, and comprises, as shown in FIG. 1, keytops 10, a holding plate 20, a rubber dome sheet 30, a light guide plate 40, a membrane board 50, and a housing 60.

Each keytop 10 has a key surface 11, as shown in FIG. 2, to which a letter or letters 12 such as English letters, Japanese letters, and the like are applied, and an operator's pressing of the key surface 11 by her/his finger allows the letter or letters to be input to a notebook size personal computer. Note that, alternatively to the letters 12, numerical characters, symbols, figures and the like may be applied to the key surface 11.

In the present embodiment, the letters 12 areas of the key surface 11 are transparent while the other areas are opaque. Consequently, the keys are visible in the darkness, as shown in FIG. 3, because light only transmits through the letters 12 areas when the keytops 10 are illuminated from below. Conversely, the letters 12 areas may be opaque while the other areas are transparent.

A large number of such keytops 10 are arranged on the top surface of the keyboard apparatus 1. Respective keytops 10 are held movably up and down by the holding plate 20 via a link mechanism 15, as shown in FIG. 4.

The link mechanism 15 is a pantograph link mechanism comprised of two arm members 16 and 17. The first arm member 16 and the second arm member 17 intersect with each other from the side elevational view thereof.

The upper end of the arm member 16 is coupled slidably with the lower surface of the keytop 10, and the lower end of the arm member 16 is coupled rotatably with the holding plate 20. On the other hand, the upper end of the second arm member 17 is coupled rotatably with the lower surface of the keytop 10, and the lower end of the second arm member 17 is coupled with the holding plate 20.

If the keytop 10 is pressed down, then the arm member 16 is caused to rotate around the lower end thereof as an axis, and the upper end is also caused to slide on the lower surface of the keytop 10. Concurrently with this, the second arm member 17 is caused to rotate around the upper end thereof as an axis, and the lower end is also caused to slide on the holding plate 20.

Thus, the link mechanism 15 is located between the keytop 10 and the holding plate 20 in such a manner, and therefore the keytop 10 is allowed to move up and down while maintaining the same location (the location facing contact points 511 and 521 of the membrane board 50), and the keytop 10 is prevented from dropping off from the keyboard apparatus 1.

Note that the link mechanism in the present invention is not limited to the pantograph-type link mechanism 15 as described above. For instance, examples of the link mechanism include a gear link mechanism in which two arm members are formed with respective gears on the end portions thereof and the gears are coupled with each other to combine those arm members in an inverted V-shape.

The holding plate 20 is provided thereon with a pair of projections 21 and 22 for one keytop 10. The first projection 21 holds the lower end of the first arm member 16 of the link mechanism 15 to be rotatable. On the other hand, the second projection 22 is formed therein with a recess 221 opened toward the first projection 21 and having a depth along the planar direction of the holding plate 20, and the lower end of the second arm member 17 is inserted into the recess 221 so as to be slidable.

In addition, the holding plate 20 is formed therein with an opening 23 between the first projection 21 and the second projection 22. Rubber dome 35 of the rubber dome sheet 30 projects from this opening 23 toward the keytop 10.

This holding plate 20 is stacked on the rubber dome sheet 30. The rubber dome sheet 30 has a sheet main body 31 and the rubber domes 35. The sheet main body 31 is comprised, for example, of polyethylene terephthalate (PET). In contrast, the rubber domes 35 are comprised, for example, of transparent silicone-based resin. These rubber domes 35 are attached with their leg portions 37 to the sheet main body 31 via transparent adhesive.

Moreover, each rubber dome 35 has a raised portion 36 projecting downward. On the other hand, the sheet main body 31 is formed therein with respective openings 32 each at a position facing the raised portion 36 of the rubber dome 35, so as not to effect upon the on-load of the contact points 511 and 521 (a load for causing the contact points 511 and 521 to be contacted with each other to establish an electrical on-state) at the time of pressing the keytop 10.

If the keytop 10 is pressed down, then also the rubber dome 35 is pressed to cause the leg portions 37 to buckle, and the raised portion 36 of the rubber dome 35 in turn presses the contact points 511 and 521 of the membrane board 50 via the light guide plate 40. Subsequently, if the pressing of the keytop 10 is released, then the leg portions 37 are restored into the initial form thereof by their own elastic force, thereby causing the contact points 511 and 521 to be separated from each other and also causing the keytop 10 to be lifted up. The rubber dome sheet 30 is stacked above the light guide plate 40.

The light guide plate 40 is a transparent film for guiding light incident from one or more light emitting diodes 54 to the keytops 10. As a specific material for constituting this light guide plate 40, for example, silicone-based resin such as silicone rubber, urethane-based resin such as thermoplastic polyurethane and cross-linked polyurethane, polyolefin-based resin such as polyethylene and polypropylene etc, ethylene-vinyl acetate (EVA), or polyethylene terephthalate (PET) may be mentioned.

In addition, it is preferred that the light guide plate 40 is comprised of a flexible material. Specifically, preferred is a material having Young's modulus of 1 to 1000 [MPa], and more preferred is a flexible material having Young's modulus of 1 to 300 [MPa]. As a specific example of material having such Young's modulus, for example, urethane-based resin (Young's modulus: about 5 to 300 [MPa]), silicone-based resin (Young's modulus: about 1 to 5[MPa]) and the like may be mentioned.

In the keyboard apparatus 1 according to the present embodiment, since the light guide plate 40 is located between the rubber dome 35 and the membrane board 50, if the light guide plate is comprised of a rigid material, such as polycarbonate (Young's modulus: about 2000 to 3000 [MPa]) or acrylic-based resin (Young's modulus: about 3000 to 3500 [MPa]), then the contact points 511 and 521 may possibly not be caused to turn on. In contrast to this, by constituting the light guide plate 40 of a flexible material having a Young's modulus within the above ranges, the contact points 511 and 521 are allowed to be turned on with an appropriate load. Note that the on-load for the contact points 511 and 521 may be optimized by adjusting the inner diameter of an opening 531 formed in a spacer 53 of the membrane board 50 and/or the thickness of the membrane base material.

The light guide plate 40 is provided thereon or therein with a diffusing section 41 for diffusing light within the light guide plate 40 toward the external, wherein the diffusing section 41 is located at a place corresponding to the rubber dome 35. This diffusing section 41 is formed by screen printing white color ink on the back surface of the light guide plate 40. Diffusing light by this diffusing section 41 causes light to be diffused from the light guide plate 40 toward the external, thereby resulting in that the light guide plate 40 emits light upward. Note that the diffusing section 41 may alternatively be formed by laser processing or roughening the surface of the light guide plate 40. Also note that the diffusing section 41 may alternatively be formed on the upper surface of the light guide plate 40.

This light guide plate 40 is stacked on the membrane board 50. The membrane board 50 has an upper sheet 51, a lower sheet 52, and the spacer 53.

The upper sheet 51 is comprised, for example, of a white colored resin product film having flexibility, such as white colored polyethylene terephthalate or white colored polyethylene naphthalate (PEN). White colored PET and white colored PEN may be obtained by mixing white pigment into PET or PEN, or foam forming in PET or PEN in itself.

By white coloring the upper sheet 51 to which the light guide plate 40 is directly stacked, the upper sheet 51 may be imparted with a functional capability of a reflecting plate. This allows to reduce the entire thickness of the keyboard apparatus 1 compared to the case where a dedicated reflecting plate is stacked between the light guide plate 40 and the membrane board 50. Note that the upper sheet 51 or the housing 60 may alternatively be imparted with a functional capability of a reflecting plate by applying white color ink to the upper sheet 51 or the inner surface of the housing 60.

Moreover, the first contact point 511 is formed on the lower surface of this upper sheet 51. This first contact point 511 is formed, for example, by screen printing silver paste on the upper sheet 51.

Also the lower sheet 52 is comprised, for example, of polyethylene terephthalate, polyethylene naphthalate, or the like. The second contact point 521 is formed on the upper surface of this lower sheet 52 so as to be located on the position corresponding to the first contact point 511. This second contact point 521 is formed, for example, by screen printing silver paste on the lower sheet 52 likewise the first contact point 511.

Note that this lower sheet 52 needs not to be white colored, and may be transparent. Also note that, alternatively to imparting the functional capability of reflecting plate to the upper sheet 51, the upper sheet 51 may be transparent and the spacer 53 may be imparted with the functional capability of reflecting plate, or the upper sheet 51 and the spacer 53 may be transparent and the lower sheet 52 may be imparted with the functional capability of reflecting plate.

The spacer 53 is comprised of the similar material as the lower sheet 52. This spacer 53 is formed therein with the opening 531 corresponding to the first and second contact points 511 and 521. Note that this spacer 53 also needs not to be white colored, and may be transparent.

In the present embodiment, the upper sheet 51 and the lower sheet 52 are stacked via the spacer 53, and the first contact point 511 and the second contact point 521 face each other via the opening 531 so as to be capable of coming close with/moving away from each other (capable of approaching and leaving each other).

If the keytop 10 is pressed down, then the raised portion 36 of the rubber dome 35 presses down the upper sheet 51 of the membrane board 50 via the light guide plate 40. This allows the upper sheet 51 to be deformed thereby causing the first contact point 511 to contact with the second contact point 521 such that the contact points 511 1 and 521 become to be turned-on status. On the other hand, if the pressing of the keytop 10 is released, then the upper sheet 51 are restored into the initial form thereof by elastic force, thereby causing the contact points 511 and 521 to be turned-off status.

Light emitting diode (LED) 54 is mounted on this membrane board 50. This light emitting diode 54 is an LED of side emitting type, and is mounted on the membrane board 50, as shown in FIG. 1, such that the emitting surface 541 thereof faces the incidence plane 42 of the light guide plate 40.

When this light emitting diode 54 is emitting, light emitted from the emitting surface 541 of the light emitting diode 54 is introduced into the light guide plate 40 via the incidence plane 42 and propagates within the light guide plate 40 while being reflected.

Then, light within the light guide plate 40 is diffused at the area where the diffusing section 41 is formed and leaked upwardly from the diffusing section 41. The leaked light upwardly from the light guide plate 40 reaches the lower surfaces of the keytops 10 through the rubber domes 35. This light only passes through portions of the letters 12 in the keytops 10 and does not pass through the other portions, and therefore the situation is obtained where only the portions of the letters 12 are seen as being luminous from above the keyboard apparatus 1. Consequently, the keys are visible even in the darkness.

In the present embodiment, as shown in FIG. 1, the membrane board 50, the light guide plate 40, the rubber dome sheet 30, and the holding plate 20 are stacked from the lower side in this order, and these are accommodated in the accommodation space 61 of the housing 60. Furthermore, the peripheral edge of the holding plate 20 is engaged with the turned back portion 62 of the housing 60, thereby holding the rubber dome sheet 30, the light guide plate 40, and the membrane board 50 between the holding plate 20 and the housing 60.

Thus, according to the present embodiment, the light guide plate 40 is located at the nearer side to the keytops 10 than the membrane board 50, and the light diffused from the light guide plate 40 is therefore guided into the keytops 10 without passing through the membrane board 50, thereby improving the brightness of illumination in the keytops 10.

Notably, in the conventional keyboard apparatus, since the holding plate is located below the membrane board, the membrane board is required to be provided therein with penetrating holes through which projections provided on the holding plate are to penetrate. Moreover, the light guide plate is stacked below the holding plate, because if such penetrating holes are formed in the light guide plate, then light is leaked at end faces of the penetrating holes. In contrast to this, according to the present embodiment, the light guide plate 40 is located between the holding plate 20 and the membrane board 50 and the holding plate 20 is located above the light guide plate 40, and the light guide plate 40 is therefore not required to be formed therein with holes through which the projections 21 and 22 of the holding plate 20 penetrate, and light is prevented from diffusing and attenuating at end faces of these holes, thereby also preventing the decreasing of the brightness of illumination in the keytops 10.

### «Second Embodiment»

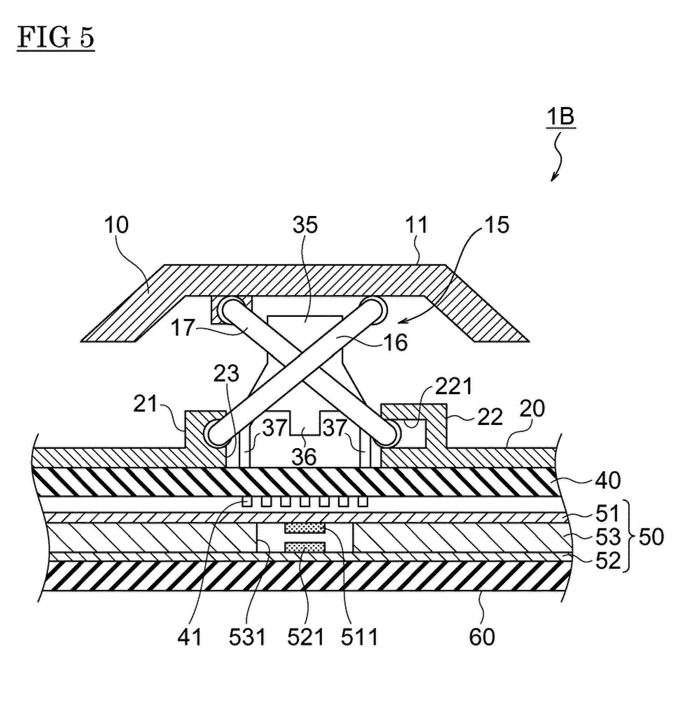

FIG. 5 is an enlarged cross-sectional view illustrating a keyboard apparatus according to the second embodiment of the present invention.

The present embodiment differs from the first embodiment in the point that the present embodiment does not comprise the sheet main body of the rubber dome sheet and that the rubber domes are directly attached to the light guide plate, but the other configuration is similar to the first embodiment. Hereinafter, the difference from the first embodiment with respect to a keyboard apparatus 1B in the second embodiment will only be described, and portions having similar configuration as the first embodiment will be omitted to be described by denoting the same reference numerals.

In the present embodiment, as shown in FIG. 5, the rubber domes 35 are attached with their leg portions 37 directly to the light guide plate 40 via transparent adhesive. This adhesive has a refractive index not less than the refractive index of the light guide plate 40 and not more than the refractive index of the rubber dome 35, and specific examples of such adhesive include an adhesive comprised of silicone-based resin or urethane-based resin, for example.

Here, urethane-based resin constituting the light guide plate 40 has a refractive index of about 1.4 to 1.5. On the other hand, silicone-based resin constituting the rubber dome 35 has a refractive index of about 4.0 to 4.5, which is thus higher than that of the light guide plate 40.

In general, if members having different refractive indices are in close contact with each other, then light propagates from the member with lower refractive index to the member with higher refractive index. In addition, light within the member with higher refractive index is totally reflected or refracted at the interface with the material having lower refractive index, and therefore light having propagated into the member with higher refractive index is prevented from returning to the member with lower refractive index. Therefore, in the present embodiment, light having propagated in the light guide plate 40 positively progresses into the rubber domes 35 via the positions where the leg portions of the rubber domes 35 are attached.

Likewise the first embodiment, according to the present embodiment, the light guide plate 40 is located at the nearer side to the keytops 10 than the membrane board 50, and the light diffused from the light guide plate 40 is therefore guided into the keytops 10 without passing through the membrane board 50, thereby improving the brightness of illumination in the keytops 10.

Moreover, likewise the first embodiment, according to the present embodiment, the light guide plate 40 is located between the holding plate 20 and the membrane board 50, and the light guide plate 40 is therefore not required to be formed therein with holes through which the projections 21 and 22 of the holding plate 20 penetrate, thereby further improving the brightness of illumination in the keytops 10.

Furthermore, as described above, according to the present embodiment, light is directly introduced from the light guide plate 40 to the rubber domes 35 utilizing the difference in refractive indices in addition to the emission from the diffusing section 41, thereby further improving the brightness of illumination in the keytops 10. In addition, the present embodiment needs not the sheet main body 31 of the rubber dome sheet 30 as described with reference to the first embodiment, thereby allowing to reduce the entire thickness of the keyboard apparatus 1B.

Moreover, according to the present embodiment, the rubber domes 35 are directly attached to the light guide plate 40 by means of adhesive, which has a refractive index not less than the refractive index of the light guide plate 40 and not more than the refractive index of the rubber domes 35, thereby not interrupting the propagation of light progressing from the light guide plate 40 to the rubber domes 35.

### «Third Embodiment»

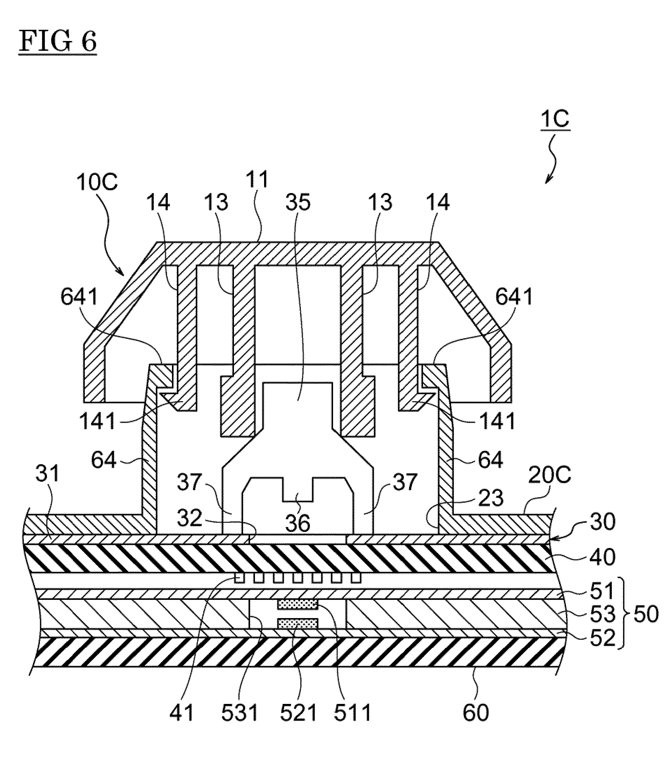

FIG. 6 is an enlarged cross-sectional view illustrating a keyboard apparatus according to the third embodiment of the present invention.

The present embodiment differs from the first embodiment in the point that the configuration of the keytops and the holding plate is different, but the other configuration is similar to the first embodiment. Hereinafter, the difference from the first embodiment with respect to a keyboard apparatus 1C in the third embodiment will only be described, and portions having similar configuration as the first embodiment will be omitted to be described by denoting the same reference numerals.

The keyboard apparatus 1C according to the present embodiment is a keyboard to be used for a desktop type personal computer.

From the lower surface of each keytop 10C of this keyboard apparatus 1C, contacting ribs 13 and engaging ribs 14 project downward. The contacting ribs 13 are contacting with the rubber dome 35. The engaging ribs 14 are engaged with a base 64 of a holding plate 20C.

Although not particularly illustrated, likewise the first embodiment, letters 12 are applied to the key surface 11 of each keytop 10C also in the present embodiment, and the letters 12 areas of the key surface 11 are transparent while the other areas of the key surface 11C are opaque.

As substitute for the first and the second projections 21 and 22, the base 64 is formed on the holding plate 20C. The peripheral edge of an upper opening of this base 64 is formed thereon with projections 641 projecting toward the inside, with which engaging clicks 141 of the engaging ribs 14 are engaged.

If the keytop 10C is pressed down, then the rubber dome 35 is deformed and the raised portion 36 presses the contact points 511 and 521 of the membrane board 50 via the light guide plate 40. Subsequently, if the pressing of the keytop 10C is released, then the rubber dome 35 is restored into the initial form, thereby causing the keytop 10C to be lifted up. At this time, the base 64 and the engaging ribs 14 are engaged with one another, and the keytop 10 is thus prevented from dropping off from the keyboard apparatus 1C.

Likewise the first embodiment, according to the present embodiment, the light guide plate 40 is located at the nearer side to the keytops 10C than the membrane board 50, and the light diffused from the light guide plate 40 is therefore guided into the keytops 10C without passing through the membrane board 50, thereby improving the brightness of illumination in the keytops 10C.

Moreover, likewise the first embodiment, according to the present embodiment, the light guide plate 40 is located between the holding plate 20C and the membrane board 50, and the light guide plate 40 is therefore not required to be formed therein with holes through which the bases 64 of the holding plate 20C penetrate, thereby further improving the brightness of illumination in the keytops 10C.

It is to be noted that the embodiments as explained hereinbefore are described to facilitate understanding of the present invention and are not described to limit the present invention. Therefore, it is intended that the elements disclosed in the above embodiments include all design changes and equivalents to fall within the technical scope of the present invention.

For example, also in the keyboard apparatus 1C according to the third embodiment, the rubber domes are directly attached to the light guide plate using adhesive comprised of transparent silicone-based resin, as described with reference to the second embodiment.

Note that the membrane board in the present embodiment represents one example of the circuit board in the present invention, the upper sheet in the present embodiment represents one example of the first sheet in the present invention, the lower sheet in the present embodiment represents one example of the second sheet in the present invention, and the rubber domes in the present embodiment represent one example of the biasing member in the present invention.

As described hereinafter, the advantageous effects of the present invention were confirmed by samples as more specifically embodying the present invention.

### <<Example 1>>

The following Sample 1 and Sample 2 are for confirming the advantageous effect of the improvement in the brightness of illumination in the keyboard apparatus according to the above-described embodiments.

### <Sample 1>

Sample 1 was prepared as being similar configuration of the keyboard apparatus as the first embodiment.

In this Sample 1, a PET film of 100 µm thickness (HS available from Teijin DuPont Films Japan Limited) was used for the sheet main body of the rubber dome sheet, and transparent rubber domes (available from Shin-Etsu Polymer Co., Ltd.) were attached to this PET film by adhesive (LCR0628A available from TOAGOSEI CO., LTD.).

For the light guide plate, a urethane sheet of 200 µm thickness (M-FILM-NY02-A available from Nihon Matai Co., Ltd.) was used. The diffusing section was formed on the lower surface of this urethane sheet by screen printing white color ink (4700M White available from JUJO CHEMICAL CO., LTD.).

For the upper sheet of the membrane board, a white colored PET film of 100 µm thickness (FW2 available from Teijin DuPont Films Japan Limited) was used, and PET films of 100 µm thickness (HS available from Teijin DuPont Films Japan Limited) were used for the lower sheet and the spacer.

The first and second contact points were formed on the upper sheet and the lower sheet, respectively, by screen printing conductive paste (DX-351H-30 available from TOYOBO CO., LTD.) containing silver filler.

This membrane board was mounted thereon with a side emitting type LED (CL-432F available from CITIZEN ELECTRONICS CO., LTD.) with 2.8 mm length, 1.0 mm width, and 0.6 mm height using conductive adhesive (3302B available from ThreeBond Co., Ltd.).

Note that, for this Sample 1, at the time of mounting the LED to the lower sheet, the lower sheet was formed thereon with circuit patterns for mounting the LED, and the upper sheet and the spacer were formed therein with penetrating holes for being inserted with the LED mounted on the lower sheet.

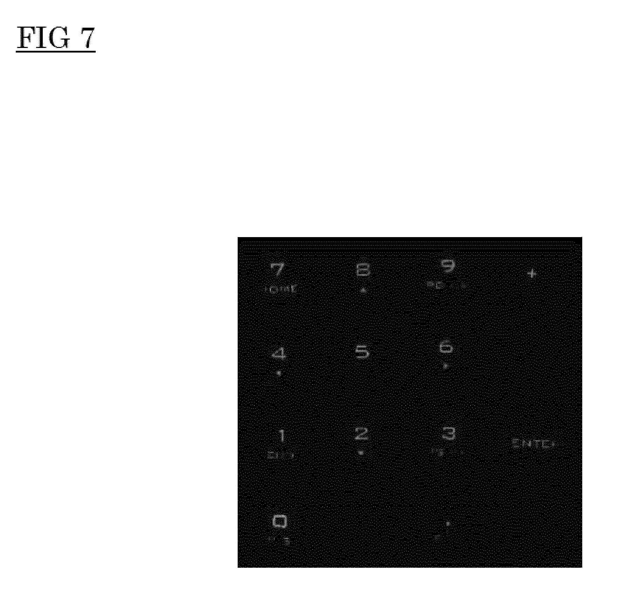

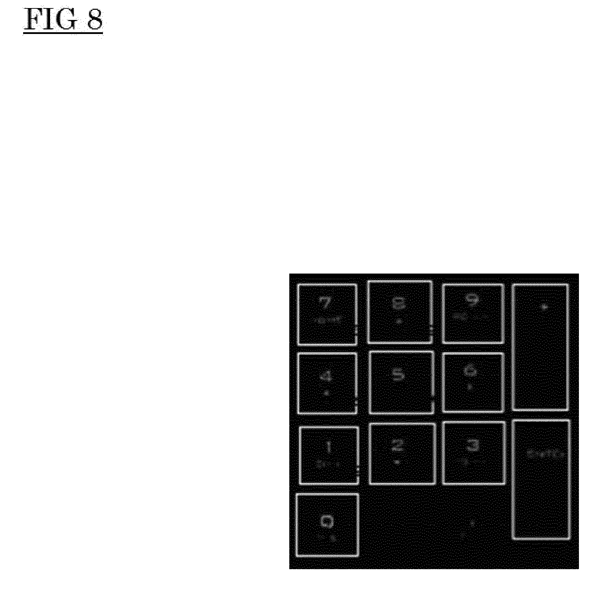

The LED of Sample 1 was applied thereto with electrical current of 100 mA using a low voltage current generator power supply (R6142 available from ADVANTEST CORPORATION), and the brightness distribution of illumination within the keytops was monitored using a two-dimensional color brightness meter (CA-2000 available from Konica Minolta Sensing, Inc.). The brightness distribution monitoring result at that time is shown in FIG. 7. In addition, a number of spots as shown in FIG. 8 were set for respective keys, and the average value of the brightness of all the spots was calculated. The calculation result is presented in Table 1. Note that frames shown by solid lines in FIG. 8 are those spots.

**[Table 1]**

| | Sample 1 (Example) | Sample 2 (Comparative Example) |
|---|---|---|
| Brightness average value [cd/m²] | 53.3 | 26.2 |

### <Sample 2>

Sample 2 was prepared as being similar configuration of the keyboard apparatus as Sample 1 except for changing the order of stacking respective members. More specifically, Sample 2 was prepared by stacking the light guide plate, the holding plate, the membrane board, and the rubber dome sheet in this order from the lower side (the stacking order described in the above-mentioned Japanese Published Patent Application No. 2002-260478).

Along with this change in stacking order, a reflecting sheet comprised of a white colored PET film of 100 µm thickness (FW2 available from Teijin DuPont Films Japan Limited) was added below the light guide plate. Moreover, the upper sheet of the membrane board was substituted by a transparent PET film (HS available from Teijin DuPont Films Japan Limited) similar as the lower sheet and the spacer. Furthermore, the rubber dome sheet and the membrane board were formed therein with penetrating holes through which the first and the second projections of the holding plate penetrate.

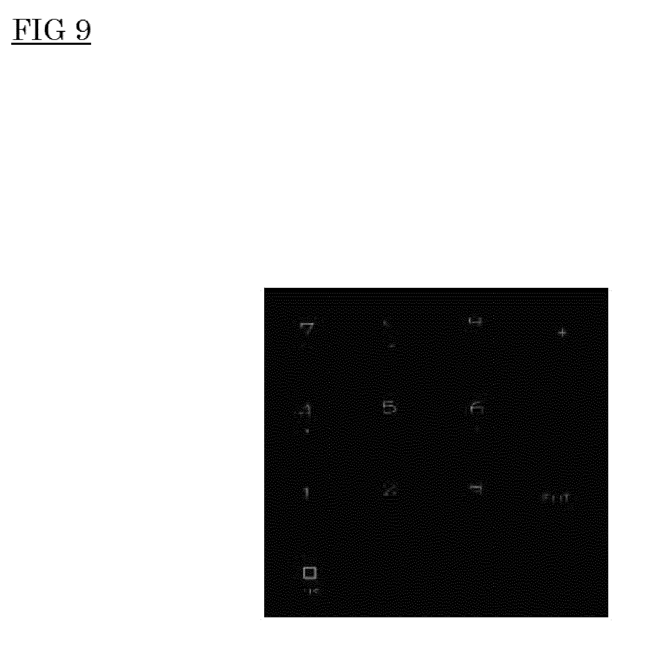

For this Sample 2, the LED was caused to light in the same manner as Sample 1, and the brightness distribution of illumination within the keytops was monitored. The brightness distribution monitoring result at that time is shown in FIG. 9. In addition, a number of spots similar as Sample 1 were set for respective keys, and the average value of the brightness of all the spots was calculated. The calculation result is presented in Table 1.

### <Consideration>

Although Sample 1 was merely altered in the stacking order of respective members compared to Sample 2, the brightness of illumination within the keytops is totally improved as shown in FIG. 7 and FIG. 9, and the brightness is increased approximately twice as shown in Table 1.

From this, it may be understood that, by locating the light guide plate between the holding plate and the membrane board and at the nearer side to the keytops than the membrane board, the brightness of illumination within the keytops is improved.

### <<Example 2>>

As described hereinafter, it was confirmed by the following Samples 3 to 9 whether or not the increasing in on-load of the keyboard apparatus according to the above-described embodiments occurred.

### <Sample 3>

Sample 3 was prepared as being similar configuration of the keyboard apparatus as Sample 1 except for using a urethane sheet of 150 µm thickness (M-FILM-NY02-A available from Nihon Matai Co., Ltd.) as the light guide plate. The configuration of this light guide plate of Sample 3 is presented in Table 2.

**[Table 2]**

| | | Sample 3 (Example) | Sample 4 (Example) | Sample 5 (Example) | Sample 6 (Example) | Sample 7 (Comparative Example) | Sample 8 (Reference Example) | Sample 9 (Reference Example) |
|---|---|---|---|---|---|---|---|---|
| Light Guide Plate | Material | Urethane | | Silicone | | No Light Guide Plate | Polycarbonate | Soft Acrylic |
| | Thickness [µm] | 150 | 200 | 150 | 200 | | 130 | 200 |

For this Sample 3, the load when the contact points of the membrane board had contacted with each other to be electrically turned on (on-load) was measured. The measurement result is presented in Table 3.

**[Table 3]**

| | Sample 3 (Example) | Sample 4 (Example) | Sample 5 (Example) | Sample 6 (Example) | Sample 7 (Comparative Example) | Sample 8 (Reference Example) | Sample 9 (Reference Example) |
|---|---|---|---|---|---|---|---|
| On-Load [N] | 0.350 | 0.366 | 0.360 | 0.368 | 0.351 | 0.551 | 1.260 |

### <Sample 4>

Sample 4 was prepared as being similar configuration of the keyboard apparatus as Sample 1 except for using a urethane sheet of 200 µm thickness (M-FILM-NY02-A available from Nihon Matai Co., Ltd.) as the light guide plate. The configuration of this light guide plate of Sample 4 is presented in the above Table 2.

For this Sample 4, the on-load was measured in the similar manner as Sample 3. The measurement result is presented in the above Table 3.

### <Sample 5>

Sample 5 was prepared as being similar configuration of the keyboard apparatus as Sample 1 except for using a silicone sheet of 150 µm thickness (Light Guide Film available from Fuji Polymer Industries Co., Ltd.) as the light guide plate. The configuration of this light guide plate of Sample 5 is presented in the above Table 2.

For this Sample 5, the on-load was measured in the similar manner as Sample 3. The measurement result is presented in the above Table 3.

### <Sample 6>

Sample 6 was prepared as being similar configuration of the keyboard apparatus as Sample 1 except for using a silicone sheet of 200 µm thickness (Light Guide Film available from Fuji Polymer Industries Co., Ltd.) as the light guide plate. The configuration of this light guide plate of Sample 6 is presented in the above Table 2.

For this Sample 6, the on-load was measured in the similar manner as Sample 3. The measurement result is presented in the above Table 3.

### <Sample 7>

Sample 7 was prepared as being similar configuration of the keyboard apparatus as Sample 1 except for not providing the light guide plate. More specifically, in this Sample 7, the rubber dome sheet was directly stacked on the membrane board without locating a light guide plate between the membrane board and the rubber dome sheet. The configuration of Sample 7 is presented in the above Table 2.

For this Sample 7, the on-load was measured in the similar manner as Sample 3. The measurement result is presented in the above Table 3.

### <Sample 8>

Sample 8 was prepared as being similar configuration of the keyboard apparatus as Sample 1 except for using a polycarbonate sheet of 130 µm thickness (LC1500 available from Idemitsu Kosan Co., Ltd.) as the light guide plate. The configuration of this light guide plate of Sample 8 is presented in the above Table 2.

For this Sample 8, the on-load was measured in the similar manner as Sample 3. The measurement result is presented in the above Table 3.

### <Sample 9>

Sample 9 was prepared as being similar configuration of the keyboard apparatus as Sample 1 except for using a soft acrylic sheet of 200 µm thickness (SA-00-R available from CRD Limited Company) as the light guide plate. The configuration of this light guide plate of Sample 9 is presented in the above Table 2.

For this Sample 9, the on-load was measured in the similar manner as Sample 3. The measurement result is presented in the above Table 3.

### <Consideration>

With respect to Samples 3 to 6 each using a flexible sheet (urethane sheet, silicone sheet) as the light guide plate, values are obtained close to the value of Sample 7 without a light guide plate. In contrast, with respect to Samples 8 and 9 each using relatively rigid sheet (polycarbonate, soft acrylic) as the light guide plate, the on-loads are significantly increased compared to Samples 3 to 7. Note that Samples 8 and 9 are reference examples for confirming the effect of decreasing in the on-load of the keyboard apparatus.

From the above, it may be recognized that, by using urethane sheet or silicone sheet as the light guide plate, the on-load is allowed to be decreased as well as the configuration without a light guide plate.

### <<Fourth Embodiment>>

The fourth embodiment will be described hereinafter. The basic configuration of a keyboard apparatus ID according to the fourth embodiment is common to those of the first to third embodiments. The keyboard apparatus ID is **characterized in that** the membrane board 50 thereof has a roughened area where at least a part of main surface facing the light guide plate 40 is roughened.

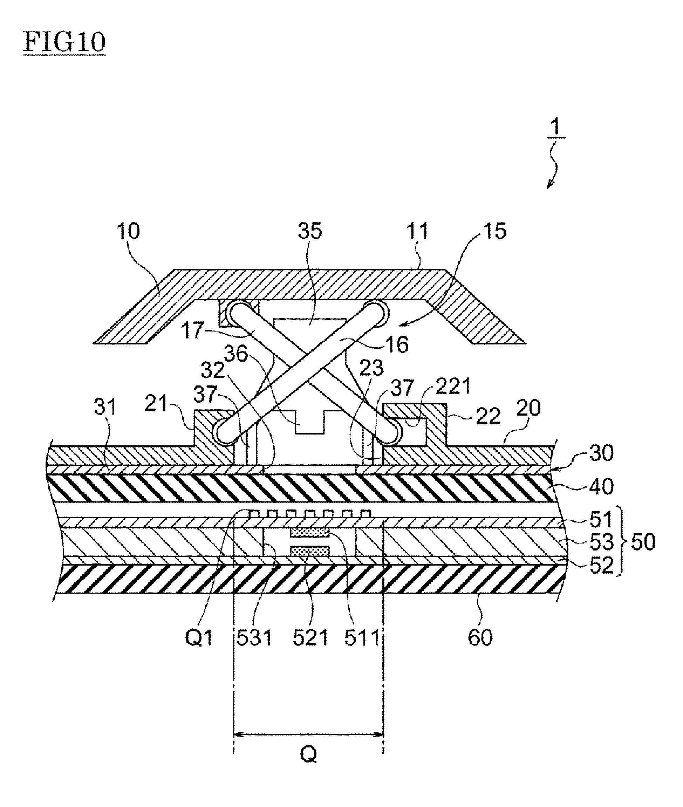

Previously described FIG. 1 is a cross-sectional view illustrating the overall configuration of a keyboard apparatus ID according to the present embodiment, FIG. 2 and FIG. 3 are plan views also illustrating keytops in the present embodiment, and FIG. 10 to FIG. 12 are enlarged cross-sectional views illustrating each example of IV section in FIG. 1.

Likewise the above-mentioned embodiments, the light guide plate 40 of the present embodiment is stacked on a membrane board 50. The membrane board 50 has an upper sheet 51, a lower sheet 52, and a spacer 53.

Meanwhile, as shown in FIG. 10, the light guide plate 40 is directly stacked on one main surface of the upper sheet 51 constituting the membrane board 50. As described above, in the keyboard apparatus ID according to the present embodiment, since the light guide plate 40 is comprised of a material, such as urethane-based resin or silicone-based resin, the light guide plate 40 and the upper sheet 51 stacked thereon are liable to adhere to each other due to the tack behavior of the light guide plate 40. If the light guide plate 40 adheres to the upper sheet 51, then light is scattered at the adhered area thereby causing a problem that the light guide plate 40 emits light at unintended area due to the diffusion of light. Thus, if the light guide plate 40 adheres to the upper sheet 51 and light is scattered at the adhered area, then light is unduly attenuated to decrease the intensity thereof as propagating from the light source, and therefore the brightness of illumination decreases in accordance with the distance from the light source, thereby resulting in disadvantages including deviation (unevenness) of the brightness of illumination when viewing the entirety of the keytops 10.

For this reason, according to the present embodiment, a roughened area Q is formed on a part of the main surface of the upper sheet 51 of the membrane board 50 facing the light guide plate 40. The roughened area is an area where a part of the surface of the upper sheet 51 is roughened. In addition, roughening means to perform a process to increase the surface roughness degree. The roughened area in the present embodiment is roughened such that the surface roughness degree, such as center line average roughness (Ra), maximum height (Rmax), and ten-point average height (Rz), becomes to be within a predetermined range of value. As the surface roughness degree increases (becomes to be rough), the area being contacted with the surface of the light guide plate 40 decreases thereby to suppress the tack behavior of the light guide plate 40.

As shown in FIG. 10, the roughened area Q in the present embodiment is formed on at least a part of the area facing the rubber dome 35. The area where the roughened area Q is to be formed is not limited to the at least a part of the area facing the rubber dome 35, and may alternatively be at least a part of the area facing the opening 531 of the spacer 53 or at least a part of the area facing the outer edge of the keytop 10. Adhesion is easily to occur at the area facing the rubber dome 35 because the area is an area where the light guide plate 40 is pressed to the upper sheet 51 due to the switching motion during the operation of the keyboard apparatus 1D. According to the present embodiment, however, the roughened area Q is formed on the place where the light guide plate 40 is easily to adhere to the upper sheet 51, thereby effectively preventing the light guide plate 40 from adhering to the upper sheet 51.

Forming method for the roughened area Q, namely, the method of roughening the main surface of the upper sheet 51 is not particularly limited, and otherwise a method of forming microscopic irregularity on the main surface of the upper sheet 51 by means of laser processing or sandblast processing, or a method of printing dot pattern Q1 using transparent or white color ink may be used. The dot pattern Q1 is a pattern for printing, in which unit features each having a predetermined surface area are arranged with a predetermined density. When the dot pattern Q1 is printed using resin ink containing white pigment, such as titanium oxide, then the main surface of the upper sheet 51 within the roughened area Q is roughened, as shown in FIG. 10, thereby preventing the upper sheet 51 and the light guide plate 40 from adhering to each other.

This may prevent the upper sheet 51 and the light guide plate 40 from adhering to each other and also prevent unintended area to emit light. In addition, the roughened area Q formed by printing resin ink may suppress the tack behavior of the light guide plate 40 and also may scatter light, thereby causing light guided by the light guide plate 40 to be scattered at the roughened area Q such that a predetermined position (the place where the roughened area Q is formed) emits light. That is, the roughened area Q in the present embodiment has a functional capability of preventing the adhesion of the light guide plate 40 as well as light diffusion capability. As a result, a light diffusing section needs not to be separately formed, and the production cost may be reduced.

Although the dot pattern Q1 is not particularly limited in its fashion, the density (fraction of the ink applied area to the planar dimension of the roughened area) may be determined from the view point of adjusting the degree of light scattering. As the distance from the light source comes to be long, the brightness of illumination of the keytops 10 tends to decrease, and therefore, for example, the density of the dot pattern Q1 within the roughened area Q may be set to be low at an area near the light source while set to be high at an area far from the light source. Thus, adjusting the degree of light scattering by the density of the dot pattern Q1 allows the brightness of illumination to be uniformly distributed.

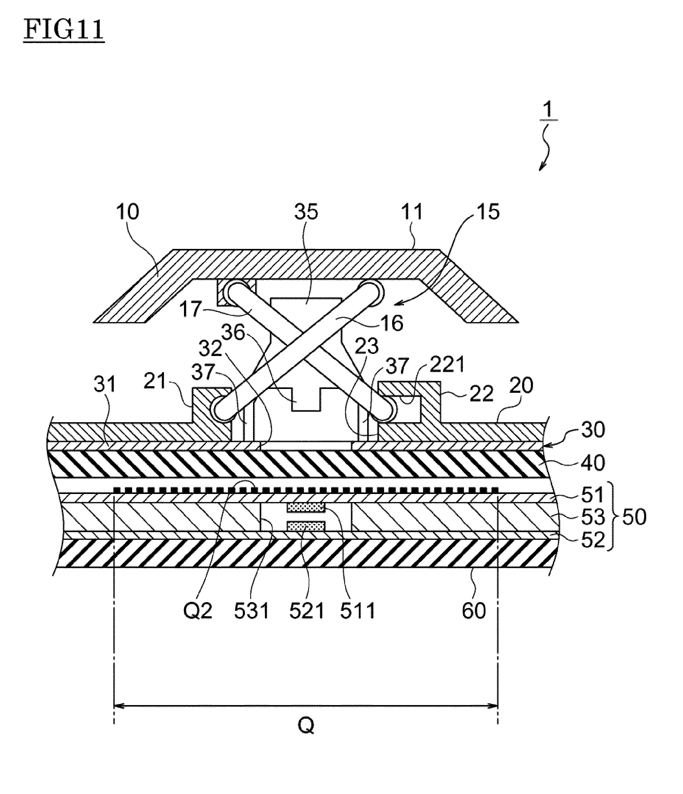

Moreover, as shown in FIG. 11, the method of forming the other roughened area Q may involve a method of printing a mat pattern Q2 using white color ink. The mat pattern Q2 is a pattern for printing wherein a homogeneous ink layer is formed.

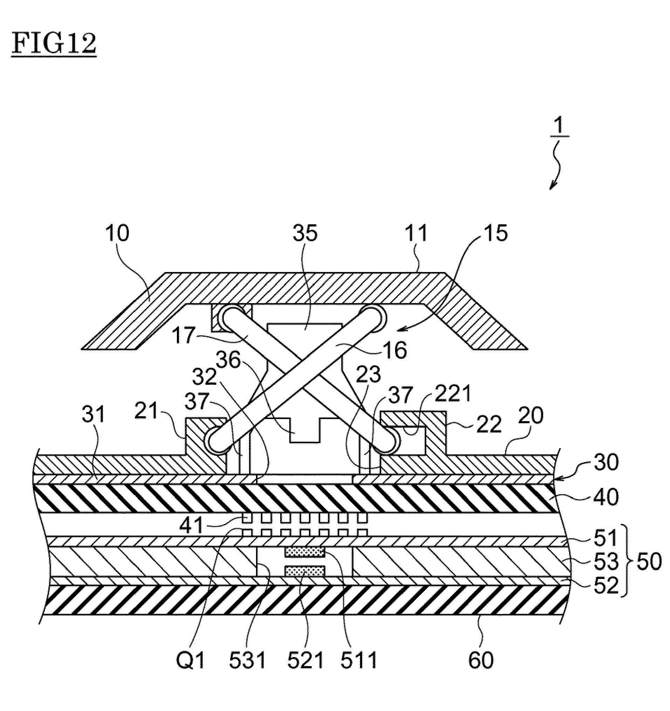

Furthermore, as shown in FIG. 12, the light guide plate 40 may be formed thereon with a diffusing section 41 for diffusing light in this light guide plate 40 toward the external, and a roughened area Q is provided on the upper sheet 51. This diffusing section 41 may be formed by screen printing a dot pattern Q1 comprised of white color ink on the back surface of the light guide plate 40. This diffusing section 41 is capable of diffusing light to cause the light guide plate 40 to emit light. Note that the diffusing section 41 may alternatively be formed by laser processing or sandblast processing the surface of the light guide plate 40. Also note that the diffusing section 41 may alternatively be formed on the upper surface of the light guide plate 40.

Although the example is shown in FIG. 12 where the roughened area Q is provided at a place facing the diffusing section 41, if the diffusing section 41 is formed on the light guide plate 40, then this diffusing section 41 may possibly have a functional capability as a roughened surface, and therefore the roughened area Q may be formed on an area other than the area facing the diffusing section 41.

The keyboard apparatus ID according to the present embodiment exhibits actions and advantageous effects similar to those of the keyboard apparatuses 1, 1B, and 1C according to the first and second embodiments.

In addition, since the roughened area Q is formed on the main surface of the upper sheet 51 which is directly stacked on the light guide plate 40, the light guide plate 40 is prevented from adhering to the upper sheet 51 even if the key is pressed down to cause the light guide plate 40 to be pressed to the upper sheet 51. Accordingly, light may be prevented from diffusing at unintended areas and the attenuation of light from the light source may be suppressed, thereby causing the key surfaces 11 of respective keytops 10 to be luminous with uniform brightness when seen from the upper side of the keyboard apparatus 1D.

The keyboard apparatus ID according to the present embodiment is produced by performing the following steps of: forming a circuit pattern, which includes the first contact point 511, on the upper sheet 51; roughening a part of one main surface of the upper sheet 51 to form the roughened area Q; stacking the lower sheet 52 via the spacer 53 on the other main surface of the upper sheet 51 wherein the lower sheet 52 is formed thereon with the second contact point 521 capable of contacting with the first contact point 511; directly stacking the light guide plate 40, which has light permeability and guides light from the light source, on the one main surface of the upper sheet 51 having formed thereon with the roughened area Q; and causing the holding plate 20 to hold the light guide plate 40, the upper sheet 51, the spacer 53, and the lower sheet 52 such that the light guide plate 40 is located between the holding plate 20 and the upper sheet 51 and at the nearer side to the keytops 10 than the upper sheet 51, wherein the holding plate 20 also holds each keytop 10 at a position facing the first contact point 511 and the second contact point 521 such that the keytop 10 is capable of approaching and leaving the upper sheet 51. Note that the step of forming a circuit pattern on the upper sheet 51, the step of forming the roughened area Q on the upper sheet 51, and the step of stacking the lower sheet 52 via the spacer 53 may be performed in an arbitrary order.

According to the production method in the present embodiment, after roughening a part of one main surface of the upper sheet 51, the light guide plate 40 is directly stacked thereto. Light guiding materials, such as urethane-based material and silicone-based material, used for the light guide plate 40 have tack behavior thereby to be with poor handling ability. As such, the treating condition of the light guide plate must be contemplated. Although a diffusing section is to be formed on the light guiding material in usual, the present embodiment involves forming the diffusing section on the upper sheet 51 thereby to simplify the production processes.

In addition, since the light guide plate, such as urethane-based material or silicone-based material, has tack behavior, the dot pattern Q1 is hard to be printed thereon, and the printing condition must thus be contemplated. Moreover, urethane-based material and silicone-based material are weak against heat or UV, possibly being deteriorated due to drying of ink, etc, and available ink is thus restricted. PET or PEN used for the upper sheet 51 in the present embodiment is free from such tack behavior, and therefore good printability is obtained compared to the light guide plate 40 comprised of urethane-based material or silicone-based material.

### «Fifth Embodiment»

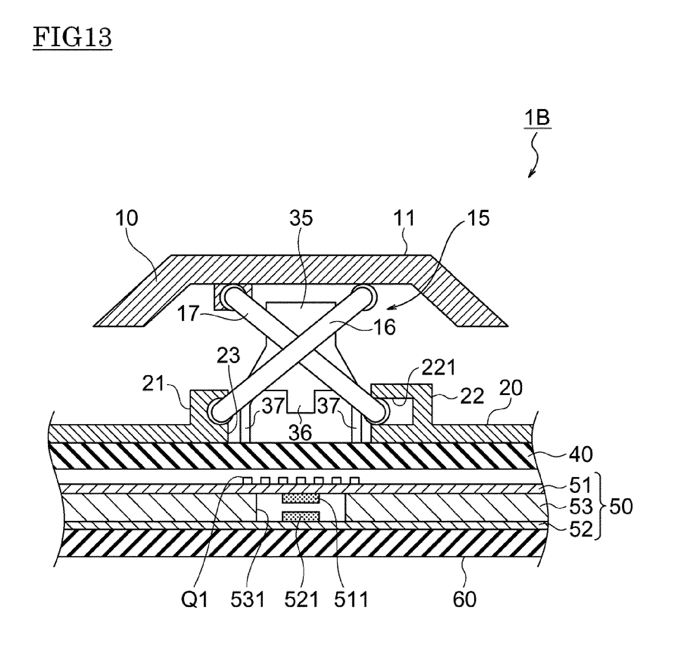

FIG. 13 is an enlarged cross-sectional view illustrating a keyboard apparatus IE according to the fifth embodiment of the present invention.

The present embodiment differs from the fourth embodiment in the point that the present embodiment does not comprise the sheet main body 31 of the rubber dome sheet 30 in the fourth embodiment and that the rubber domes 35 are directly attached to the light guide plate 40, but the other configuration is similar to the fourth embodiment. Hereinafter, the difference from the fourth embodiment with respect to the keyboard apparatus IE in the fifth embodiment will mainly be described, and portions having similar configuration as the fourth embodiment will be omitted to be described by denoting the same reference numerals.

In the present embodiment, as shown in FIG. 13, the rubber domes 35 are attached with their leg portions 37 directly to the light guide plate 40 via transparent adhesive. This adhesive has a refractive index not less than the refractive index of the light guide plate 40 and not more than the refractive index of the rubber dome 35, and specific examples of such adhesive include an adhesive comprised of silicone-based resin or urethane-based resin, for example.

Here, urethane-based resin constituting the light guide plate 40 has a refractive index of about 1.4 to 1.5. On the other hand, silicone-based resin constituting the rubber dome 35 has a refractive index of about 4.0 to 4.5, which is thus higher than that of the light guide plate 40.

In general, if members having different refractive indices adhere to each other, then light propagates from the member with lower refractive index to the member with higher refractive index. In addition, light within the member with higher refractive index is totally reflected or refracted at the interface with the material having lower refractive index, and therefore light having propagated into the member with higher refractive index is prevented from returning to the member with lower refractive index. Therefore, in the present embodiment, light having propagated in the light guide plate 40 positively progresses into the rubber domes 35 via the positions where the leg portions of the rubber domes 35 are attached.

Likewise the fourth embodiment, according to the present embodiment, the light guide plate 40 is located at the nearer side to the keytops 10 than the membrane board 50, and the light diffused from the light guide plate 40 is therefore guided into the keytops 10 without passing through the membrane board 50 and the holding plate 20, thereby improving the brightness of illumination in the keytops 10. In addition, likewise the fourth embodiment, since the roughened area Q is formed on the main surface of the upper sheet 51 which is directly stacked on the light guide plate 40, the light guide plate 40 comprised of a material with high tack behavior is prevented from adhering to the upper sheet 51.

Moreover, likewise the fourth embodiment, according to the present embodiment, the light guide plate 40 is located between the holding plate 20 and the membrane board 50, and the light guide plate 40 is therefore not required to be formed therein with holes through which the projections 21 and 22 of the holding plate 20 penetrate, thereby preventing the brightness of illumination in the keytops 10 from deteriorating.

Furthermore, as described above, according to the present embodiment, light is directly introduced from the light guide plate 40 to the rubber domes 35 utilizing the difference in refractive indices in addition to the emission from the diffusing section 41, thereby improving the brightness of illumination in the keytops 10. In addition, the present embodiment needs not the sheet main body 31 of the rubber dome sheet 30 as described with reference to the first embodiment, thereby allowing to reduce the entire thickness of the keyboard apparatus 1E.

Moreover, according to the present embodiment, the rubber domes 35 are directly attached to the light guide plate 40 by means of adhesive, which has a refractive index not less than the refractive index of the light guide plate 40 and not more than the refractive index of the rubber domes 35, thereby not interrupting the propagation of light progressing from the light guide plate 40 to the rubber domes 35.

### «Sixth Embodiment»

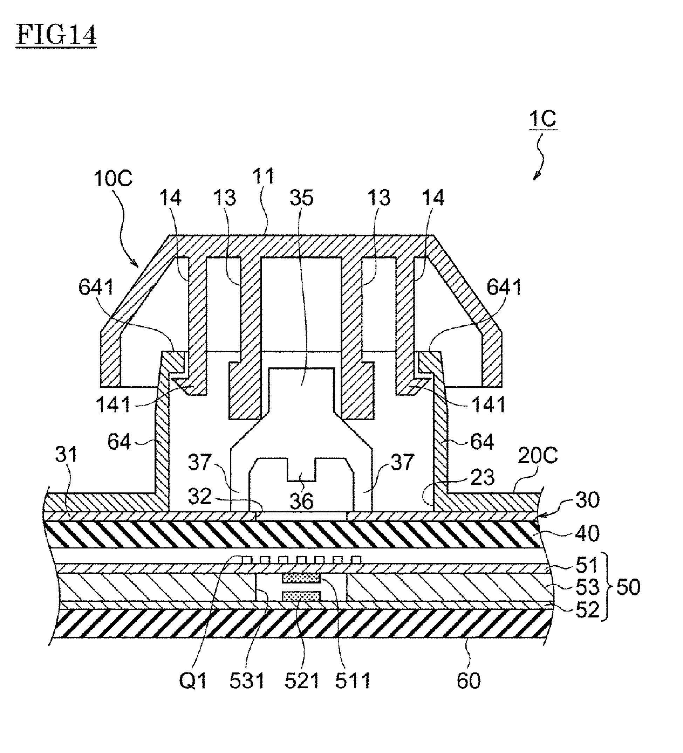

FIG. 14 is an enlarged cross-sectional view illustrating a keyboard apparatus according to the sixth embodiment of the present invention.

The present embodiment differs from the fourth embodiment in the point that the configuration of the keytops and the holding plate is different, but the other configuration is similar to the fourth embodiment. Hereinafter, the difference from the fourth embodiment with respect to a keyboard apparatus 1F in the sixth embodiment will mainly be described, and portions having similar configuration as the fourth embodiment will be omitted to be described by denoting the same reference numerals.

The keyboard apparatus 1F according to the present embodiment is a keyboard to be used for a desktop type personal computer.

From the lower surface of each keytop 10C of this keyboard apparatus 1F, contacting ribs 13 and engaging ribs 14 project downward. The contacting ribs 13 are contacting with the rubber dome 35. The engaging ribs 14 are engaged with a base 64 of a holding plate 20C.

Although not particularly illustrated, likewise the fourth embodiment, letters 12 are applied to the key surface 11 of each keytop 10C also in the present embodiment, and the letters 12 areas of the key surface 11 are transparent while the other areas are opaque.

As substitute for the first and the second projections 21 and 22, the base 64 is formed on the holding plate 20C. The peripheral edge of an upper opening of this base 64 is formed thereon with projections 641 projecting toward the inside, with which engaging clicks 141 of the engaging ribs 14 are engaged.

If the keytop 10C is pressed down, then the rubber dome 35 is deformed and the raised portion 36 presses the contact points 511 and 521 of the membrane board 50 via the light guide plate 40. Subsequently, if the pressing of the keytop 10C is released, then the rubber dome 35 is restored into the initial form, thereby causing the keytop 10C to be lifted up. At this time, the base 64 and the engaging ribs 14 are engaged with one another, and the keytop 10C is thus prevented from dropping off from the keyboard apparatus 1F.

Likewise the fourth embodiment, according to the present embodiment, the light guide plate 40 is located at the nearer side to the keytops 10C than the membrane board 50, and the light diffused from the light guide plate 40 is therefore guided into the keytops 10C without passing through the membrane board 50 and the holding plate 20, thereby improving the brightness of illumination in the keytops 10C.

Moreover, likewise the fourth embodiment, according to the present embodiment, the light guide plate 40 is located between the holding plate 20C and the membrane board 50, and the light guide plate 40 is therefore not required to be formed therein with holes through which the projection 64 of the holding plate 20C penetrate, thereby preventing the brightness of illumination in the keytops 10C from deteriorating. In addition, likewise the fourth embodiment, since the upper sheet 51 (membrane board 50) is provided thereon with the roughened area where at least a part of the main surface of the upper sheet 51 facing the light guide plate 40 is roughened, the light guide plate 40 comprised of a material with high tack behavior and the upper sheet 51 are prevented from adhering to each other.

It is to be noted that the embodiments as explained hereinbefore are described to facilitate understanding of the present invention and are not described to limit the present invention. Therefore, it is intended that the elements disclosed in the above embodiments include all design changes and equivalents to fall within the technical scope of the present invention.

For example, also in the keyboard apparatus 1F according to the sixth embodiment, the rubber domes are directly attached to the light guide plate using adhesive comprised of transparent silicone-based resin, as described with reference to the fifth embodiment.

Note that the membrane board 50 in the present embodiment represents one example of the circuit board in the present invention, the upper sheet 51 in the present embodiment represents one example of the first sheet in the present invention, the lower sheet 52 in the present embodiment represents one example of the second sheet in the present invention, and the rubber domes 35 in the present embodiment represent one example of the biasing member in the present invention.

As described hereinafter, the advantageous effects of the present invention were confirmed by samples as more specifically embodying the present invention.

### «Example 3»

The following Sample 31 and Sample 32 are for confirming an advantageous effect that the brightness of illumination in the keyboard apparatus according to the above-described embodiments is maintained.

### <Sample 31>

Sample 31 was prepared as corresponding to the keyboard apparatus according to the fourth embodiment.

In this Sample 31, a white colored PET film of 100 µm thickness (HS available from Teijin DuPont Films Japan Limited) was used wherein the entire surface of one main surface was roughened such that the maximum height Rmax was to be 10 µm using sandblast method. This PET film represents the upper sheet 51 of the membrane board 50.

For the light guide plate, a urethane sheet of 200 µm thickness (M-FILM-NY02-A available from Nihon Matai Co., Ltd.) was used. The diffusing section was formed on the lower surface of this urethane sheet by screen printing white color ink (4700M White available from JUJO CHEMICAL CO., LTD.). The diffusing section was formed so as to be apart from each side of the urethane sheet by 14.5 mm. The outer area with no formation of this diffusing section up to 14.5 mm from each side of the urethane sheet was to be an applying area of pressing force.

At the side surface of the light guide board, a side emitting type LED (CL-432F available from CITIZEN ELECTRONICS CO., LTD.) with 2.8 mm length, 1.0 mm width, and 0.6 mm height was located as a light source.

The urethane sheet was stacked on the above PET film to prepare Sample 31.

### <Sample 32>

Sample 32 was prepared as a comparative sample.

As this Sample 32, a white colored PET film of 100 µm thickness (HS available from Teijin DuPont Films Japan Limited) was used without any roughening.

As the light guide plate, the same one as that of Sample 31 was used.

At the side surface of the light guide board, the same side emitting type LED as that of Sample 31 was located as a light source.

The urethane sheet was stacked on the above PET film to prepare Sample 32.

The LED of Sample 31 was applied thereto with electrical current of 100 mA using a low voltage current generator power supply (R6142 available from ADVANTEST CORPORATION), and the brightness of the diffusing section of the urethane sheet was measured in the status of lighting the LED. Measurement condition was as follows: exposure: 1/64 ND100% normal, smear correction: none, acceptable value of dark place: 5.00, and the number of pixels: 490x490. Integration time was set to be 16 seconds and the average during that time was calculated. The calculation result is presented in Table 4 below as "Brightness before Applying".

Thereafter, the brightness was measured under the above condition in the case of applying pressing force of 20 N during 10 seconds to the applying area of the light guide in each of Sample 31 and Sample 32 using a pusher (radius of ball is 15 mm). The calculation result is presented in Table 4 below as "Brightness after Applying".

**[Table 4]**

| Sample | Brightness before Applying [cd/m²] | Brightness after Applying [cd/m²] |
|---|---|---|
| Sample 31 (Example) | 5.49 | 5.52 |
| Sample 32 (Comparative Example) | 5.75 | 3.46 |

### <Consideration>

In contrast to Sample 32, Sample 31 presented no change in brightness between before and after the applying of pressing force, while the brightness of Sample 32 decreased about 40% after the applying of pressing force compared to before the applying of pressing force.

Considering this, by roughening the main surface of the upper sheet contacting with the light guide plate, the light guide plate and the upper sheet may be prevented from adhering to each other thereby suppressing the deterioration in the brightness.

It may be understood that, although pressing force is repeated to be applied to the keyboard apparatus 1 (D-F) as repeated use in general, the keyboard apparatus 1 according to the present embodiment prevents the brightness of illumination from deteriorating and maintains the brightness, even if the keyboard apparatus 1 is under such usage environment, because the upper sheet is roughened thereby avoiding the light guide plate from adhering to the upper sheet.

Hereinafter, the seventh to ninth embodiments according to the present invention will be described with reference to the drawings.

### <<Seventh Embodiment>>

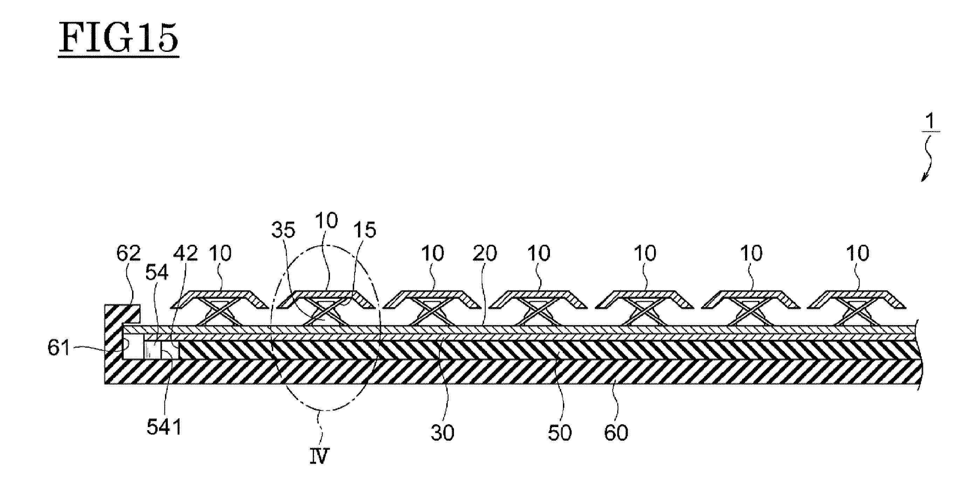

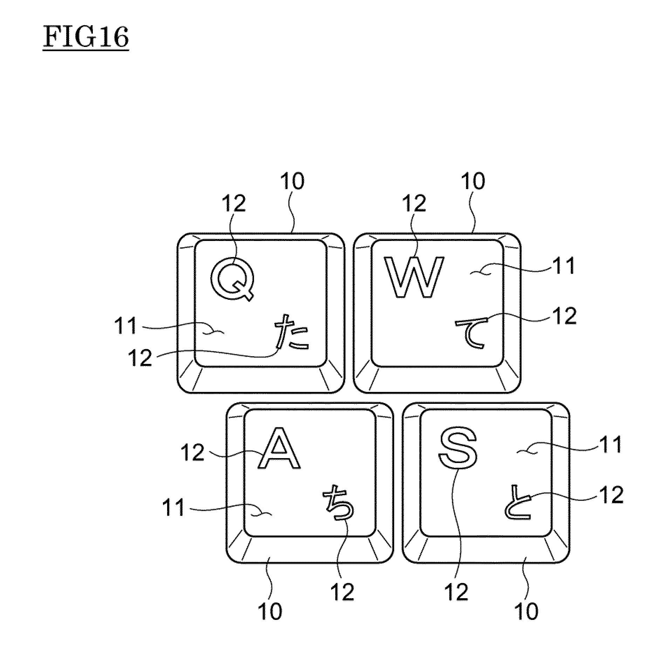

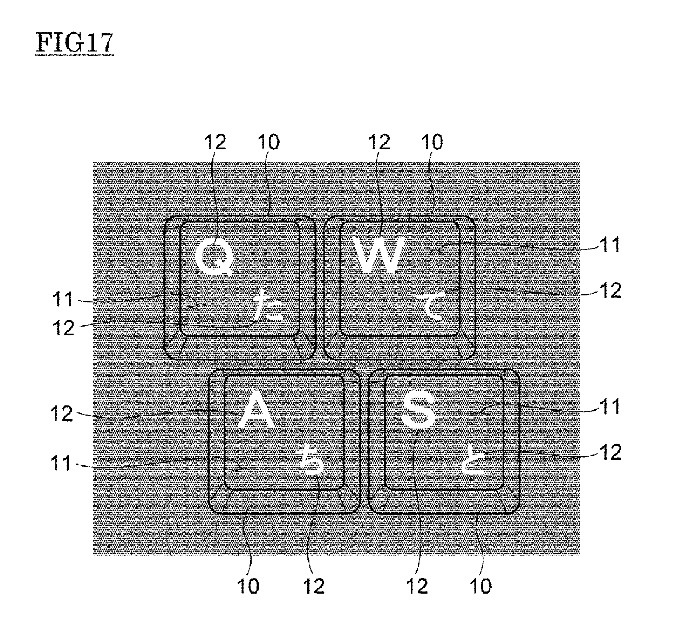

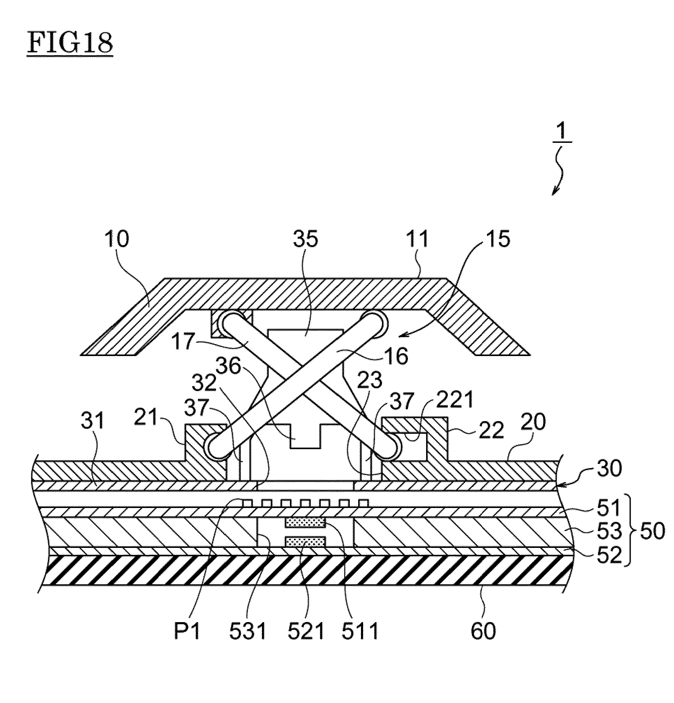

FIG. 15 is a cross-sectional view illustrating the overall configuration of a keyboard apparatus according to the present embodiment, FIG. 16 and FIG. 17 are plan views illustrating keytops in the present embodiment, and FIG. 18 to FIG. 21 are enlarged cross-sectional views illustrating each example of IV section of FIG. 15.

Keyboard apparatus 1G according to the present embodiment is a keyboard to be used for a notebook sized personal computer or the like, and comprises, as shown in FIG. 15, keytops 10, a holding plate 20, a rubber dome sheet 30, a membrane board 50, a light emitting diode 54, and a housing 60.

Each keytop 10 has a key surface 11, as shown in FIG. 16, to which a letter or letters 12 such as English letters, Japanese letters, and the like are applied, and an operator's pressing of the key surface 11 by her/his finger allows the letter or letters to be input to a notebook size personal computer. Note that, alternatively to the letters 12, numerical characters, symbols, figures and the like may be applied to the key surface 11.

In the present embodiment, the letters 12 areas of the key surface 11 are transparent while the other areas are opaque. Consequently, the keys are visible in the darkness, as shown in FIG. 17, because light only transmits through the letters 12 areas when the keytops 10 are illuminated from below. Conversely, the letters 12 areas may be opaque while the other areas are transparent.

A large number of such keytops 10 are arranged on the top surface of the keyboard apparatus 1G. Respective keytops 10 are held movably up and down by the holding plate 20 via a link mechanism 15, as shown in FIG. 18.

The link mechanism 15 is a pantograph link mechanism comprised of two arm members 16 and 17. The first arm member 16 and the second arm member 17 intersect with each other from the side elevational view thereof.

The upper end of the arm member 16 is coupled slidably with the lower surface of the keytop 10, and the lower end of the arm member 16 is coupled rotatably with the holding plate 20. On the other hand, the upper end of the second arm member 17 is coupled rotatably with the lower surface of the keytop 10, and the lower end of the second arm member 17 is coupled with the holding plate 20.

If the keytop 10 is pressed down, then the arm member 16 is caused to rotate around the lower end thereof as an axis, and the upper end is also caused to slide on the lower surface of the keytop 10. Concurrently with this, the second arm member 17 is caused to rotate around the upper end thereof as an axis, and the lower end is also caused to slide on the holding plate 20.

Thus, the link mechanism 15 is located between the keytop 10 and the holding plate 20 in such a manner, and therefore the keytop 10 is allowed to move up and down while maintaining the same location (the location facing contact points 511 and 521 of the membrane board 50), and the keytop 10 is prevented from dropping off from the keyboard apparatus 1G.

Note that the link mechanism in the present invention is not limited to the pantograph-type link mechanism 15 as described above. For instance, examples of the link mechanism include a gear link mechanism in which two arm members are formed with respective gears on the end portions thereof and the gears are coupled with each other to combine those arm members in an inverted V-shape.

The holding plate 20 is provided thereon with a pair of projections 21 and 22 for one keytop 10. The first projection 21 holds the lower end of the first arm member 16 of the link mechanism 15 to be rotatable. On the other hand, the second projection 22 is formed therein with a recess 221 along the planar direction of the holding plate 20 and toward the first projection 21, and the lower end of the second arm member 17 is inserted into the recess 221 so as to be slidable.

In addition, the holding plate 20 is formed therein with an opening 23 between the first projection 21 and the second projection 22. Rubber dome 35 of the rubber dome sheet 30 projects from this opening 23 toward the keytop 10.

This holding plate 20 is stacked on the rubber dome sheet 30. The rubber dome sheet 30 has a sheet main body 31 and the rubber domes 35. The sheet main body 31 is comprised, for example, of polyethylene terephthalate (PET). In contrast, the rubber domes 35 are comprised, for example, of transparent silicone-based resin. These rubber domes 35 are attached with their leg portions 37 to the sheet main body 31 via transparent adhesive.

Moreover, each rubber dome 35 has a raised portion 36 projecting downward. On the other hand, the sheet main body 31 is formed therein with respective openings 32 each at a position facing the raised portion 36 of the rubber dome 35, so as to decrease the on-load of the contact points 511 and 521 (a load for causing the contact points 511 and 521 to be contacted with each other to establish an electrical on-state) at the time of pressing the keytop 10.

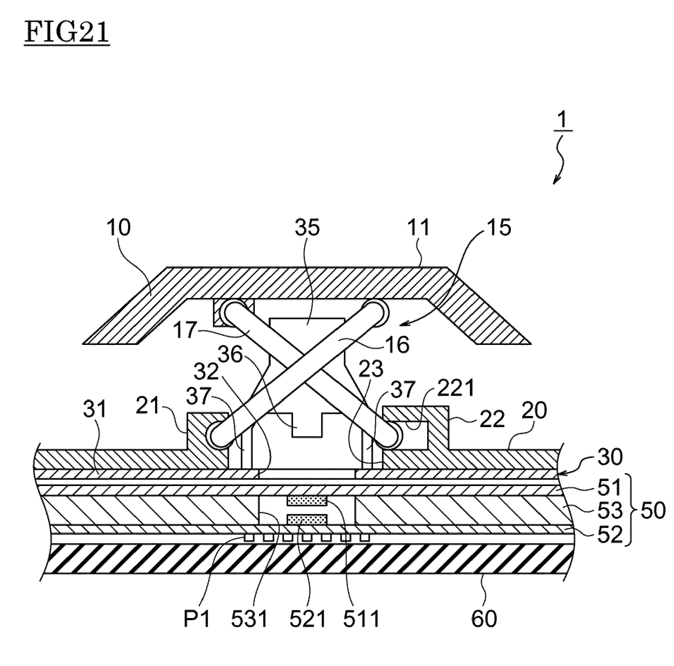

If the keytop 10 is pressed down, then also the rubber dome 35 is pressed to cause the leg portions 37 to buckle, and the raised portion 36 of the rubber dome 35 in turn presses the contact points 511 and 521 of the membrane board 50. Subsequently, if the pressing of the keytop 10 is released, then the leg portions 37 are restored into the initial form thereof by their own elastic force, thereby causing the contact points 511 l and 521 to be separated from each other and also causing the keytop 10 to be lifted up. This rubber dome sheet 30 is stacked above the membrane board 50. Note that FIG. 18 illustrates exaggeratingly a diffusing section P1 as will be described later and also illustrates the membrane board 50 and the sheet main body 31 of the rubber dome sheet 30 as if they are apart from each other in order to describe the configuration in an easily understood manner, but in actual the sheet main body 31 of the rubber dome sheet 30 is stacked on the membrane board 50 formed thereon with the diffusing section P1 (also in FIG. 21 as will be described later).

The membrane board 50 in the present embodiment has an upper sheet 51, a lower sheet 52, and a spacer 53. The first contact point 511 is formed on the lower surface of the upper sheet 51, and the second contact point 521 is formed on the upper surface of the lower sheet 52. The first contact point 511 and the second contact point 521 are formed, for example, by screen printing silver paste on the upper sheet 51 and the lower sheet 52. In addition, the spacer 53 is formed therein with an opening 531 corresponding to the first and second contact points 511 and 521.

In the present embodiment, the upper sheet 51 or the lower sheet 52 involves a light guiding ability for guiding light of the light emitting diode 54 incident from a light introducing portion to the keytops 10. Examples of a combination of the upper sheet 51 and the lower sheet 52 at least either one of which involves a light guiding ability include a combination where the upper sheet 51 is comprised of light guiding material and the lower sheet 52 is comprised of white colored PET, a combination where the lower sheet 52 is comprised of light guiding material and the upper sheet 51 is comprised of transparent PET, and other combination.

At an end portion of the above-described membrane board 50, the light emitting diode 54 is provided for lighting the keytops 10.

When the upper sheet 51 is comprised of a material involving light guiding ability as shown in FIG. 18, as a specific material for the upper sheet 51, for example, silicone-based resin such as silicone rubber, urethane-based resin such as thermoplastic polyurethane and cross-linked polyurethane, polyolefin-based resin such as polyethylene and polypropylene etc, ethylene-vinyl acetate (EVA), or polyethylene terephthalate (PET) may be mentioned.

In addition, it is preferred that the upper sheet 51 having light guiding ability is comprised of a flexible material. Specifically, it is preferred that Young's modulus of the material is 1 to 1000 [MPa], and particularly more preferred is 1 to 300 [MPa]. As a specific example of such material, for example, urethane-based resin (Young's modulus: about 5 to 300 [MPa]), silicone-based resin (Young's modulus: about 1 to 5[MPa]) and the like may be mentioned.

In the keyboard apparatus 1G according to the present embodiment, if the upper sheet 51 is comprised of a rigid material, such as polycarbonate (Young's modulus: about 2000 to 3000 [MPa]) or acrylic-based resin (Young's modulus: about 3000 to 3500 [MPa]), then the upper sheet becomes hard to be pressed down and the contact points 511 and 521 may possibly not turn on. In contrast to this, by constituting the upper sheet 51 of a flexible material having a Young's modulus within the above-described ranges, the on-load of the contact points 511 and 521 are allowed to be optimized. Note that such optimization may also be achieved by the inner diameter of an opening 531 formed in a spacer 53 and/or the thickness of the membrane base material.

In the present embodiment, as shown in FIG. 18, the diffusing section P1 is formed on a part of the other main surface of the upper sheet 51. This diffusing section P1 is formed on the upper surface of the upper sheet 51 by means of printing dot pattern using transparent or white color ink. Diffusing of light at this diffusing section P1 allows the upper sheet 51 to emit light around the diffusing section P1. Note that the forming method for the diffusing section P1 is not limited to printing dot pattern using transparent or white color ink, and otherwise a method of forming microscopic irregularity on the main surface of the upper sheet 51 by means of laser processing or sandblast processing may be used. The dot pattern is a pattern for printing, in which unit features each having a predetermined surface area are arranged with a predetermined density. As white color ink, resin ink containing white pigment, such as titanium oxide, may be used.

Although the dot pattern is not particularly limited in its fashion, the density of the dot pattern in the diffusing section P1 (fraction of the ink applied area to the planar dimension) may be set from the view point of adjusting the degree of light scattering. As the distance from the light source comes to be long, the brightness of illumination of the keytops 10 tends to decrease, and therefore, for example, the density of the dot pattern within the diffusing section P1 near the light source may be set to be low while the density of the dot pattern within the diffusing section P1 far from the light source may be set to be high. Thus, adjusting the printing density of the dot pattern allows the brightness of illumination in the keytops 10 to be uniformly distributed.

Although the diffusing section P1 in the present embodiment is not particularly limited so long as being formed within a range where the illumination of the keys may be recognized, for example as shown in FIG. 18, the diffusing section P1 may alternatively be formed at an area facing each keytop 10, formed at an area facing the raised portion 36 of each rubber dome 35, or formed at an area facing each opening 531 of the spacer 53.

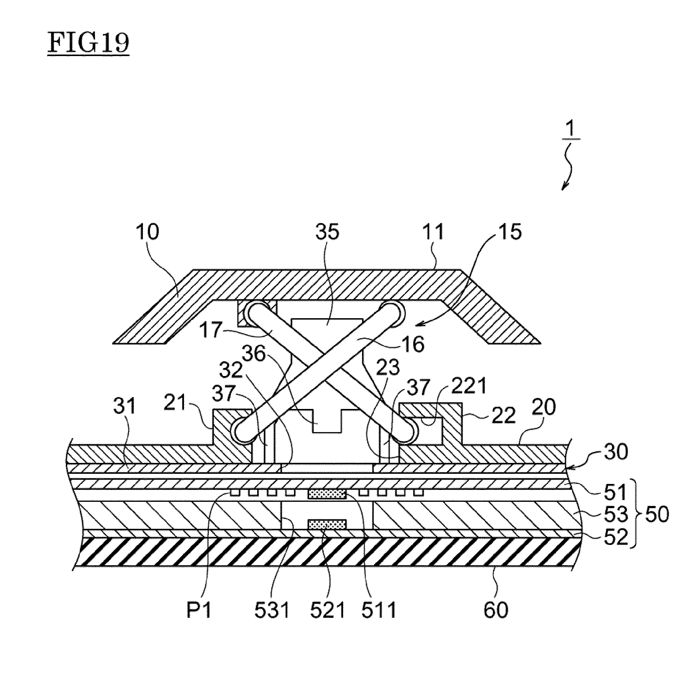

Moreover, as shown in FIG. 19, the diffusing section P1 may alternatively be formed on one surface of the upper sheet 51, that is, the side of being formed with the first contact point 511. In this case, the diffusing section P1 is formed at periphery of the first contact point 511 and at a location facing each keytop 10.

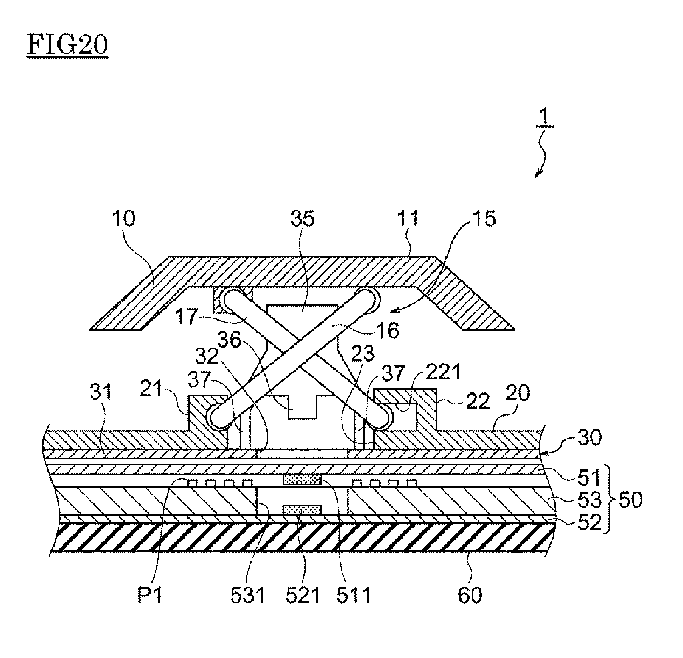

Note that, as shown in FIG. 20, the diffusing section P1 may alternatively be provided on the upper side surface of the spacer 53.

In FIG. 19 and FIG. 20, in order to illustrate exaggeratingly the diffusing section P1, the upper sheet 51 and the spacer 53 are expressed so as to be apart from each other, while in actual the upper sheet 51 and the spacer 53 contacts with each other.

As previously described, when the upper sheet 51 is comprised of a material involving light guiding ability, it is preferred that the lower sheet 52 and/or the spacer 53 is comprised of a white colored resin product film having flexibility, such as white colored polyethylene terephthalate or white colored polyethylene naphthalate (PEN). White colored PET and white colored PEN may be obtained by mixing white pigment into PET or PEN, or foam forming in PET or PEN in itself. By white coloring the spacer 53 directly stacked on the upper sheet 51 involving light guiding ability, the spacer 53 may be imparted with a functional capability of a reflecting plate. This allows to reduce the entire thickness of the keyboard apparatus 1G compared to the case where a dedicated reflecting plate is stacked between the upper sheet 51 and the spacer 53. Note that the spacer 53 or the housing 60 may alternatively be imparted with a functional capability of a reflecting plate by applying white color ink to the surface of the upper sheet 51 on which the first contact point 511 is formed, the spacer 53, or the inner surface of the housing 60. Also note that, instead of imparting a functional capability of a reflecting plate to the spacer 53, the lower sheet 52 may be provided with a functional capability of a reflecting plate by making the spacer 53 be transparent.

In the case of forming the membrane board 50 as a three-layer structure, peripheral of each layer is usually bonded together using adhesive, while in the case of constituting all three layers of light guide plates from the viewpoint of increasing the light guiding ability or for other reasons, entire surfaces of the three layers are required to be in close contact with one another. The reason why is that, if air is present between the light guide plates, then the refractivity changes thereby deteriorating the light guiding performance. However, the work is difficult for causing entire surfaces of the three layers to be in close contact with one another so as not to involve air bubbles, and it is not easy to select an appropriate adhesive not having an influence on the light guiding performance, such as refractivity between the light guiding plates. Here, in order to avoid this problem, if only peripheral portion is caused to adhere as in the case of usual membrane board, then advantageous effects, such as improving the light guiding ability, may not be obtained. Moreover, light guide plates are relatively expensive in general, and cost will thus increase if using three layers of light guiding materials. Furthermore, if causing the upper sheet 51 to act as a light guide plate and causing the lower sheet 52 or the spacer 53 as a reflecting plate, then a reflecting plate is not required to be separately provided, while on the other hand, if employing all the three layers of light guide plates, then a reflecting plate is required to be separately provided, thereby increasing the thickness of the membrane board 50. According to the present embodiment, the upper sheet 51 is comprised of a material involving a light guiding ability, and therefore the problems occurrence may be reduced that the unevenness of brightness occurs at the above-described closely contacting areas and that air bubbles are generated at the adhesive surfaces, compared to the case where all of the upper sheet 51, the lower sheet 52, and the spacer 53 are comprised of light guiding materials. Since materials involving light guiding ability are more expensive than white colored PET etc, by constituting only the upper sheet 51 from light guiding material, as in the present embodiment, it is enabled to improve the brightness while reducing the cost.

On the other hand, in the case, as shown in FIG. 21, where the lower sheet 52 is comprised of a material involving light guiding ability, it is preferred that the upper sheet 51 and the spacer 53 are comprised of transparent resin product films having flexibility, such as transparent polyethylene terephthalate or transparent polyethylene naphthalate (PEN). In this case, a material not involving light guiding ability may be used as the upper sheet 51.

Since the lower sheet 52 is not pressed down at the time of switching operation, when a light guiding material is used as the lower sheet 52, Young's modulus or flexibility is not limited, and therefore, in addition to the above materials, a rigid material, such as polycarbonate or acrylic-based resin, may be selected. This allows to select lower price material with good light guiding ability.

Thus, when the lower sheet 52 involves light guiding ability, the diffusing section P1 may be formed at the lower surface side of the lower sheet 52, as shown in FIG. 21. Of course, the diffusing section P1 may be formed at the upper surface side of the lower sheet 52.

As illustrated in the above-referenced FIG. 18 to FIG. 21, in the keyboard apparatus 1G according to the present embodiment, the upper sheet 51 and the lower sheet 52 are stacked via the spacer 53, and the first contact point 511 and the second contact point 521 face each other via the opening 531 so as to be capable of approaching and leaving each other.

If the keytop 10 is pressed down, then the raised portion 36 of the rubber dome 35 presses down the upper sheet 51 of the membrane board 50. This allows the upper sheet 51 to be deformed thereby causing the first contact point 511 to contact with the second contact point 521 such that the contact points 511 and 521 become to be turned-on status. On the other hand, if the pressing of the keytop 10 is released, then the upper sheet 51 are restored into the initial form thereof by elastic force, thereby causing the contact points 511 and 521 to be turned-off status.

Referring again to FIG. 15, light emitting diode (LED) 54 is mounted on this membrane board 50. This light emitting diode 54 is an LED of side emitting type, and is located, as shown in FIG. 15, such that the emitting surface 541 thereof faces a light introducing portion 42 of the upper sheet 51 or the lower sheet 52, which involves light guiding ability.

When this light emitting diode 54 is emitting, light emitted from the emitting surface 541 of the light emitting diode 54 is introduced into the upper sheet 51 or the lower sheet 52 involving light guiding ability via the light introducing portion 42 and propagates within that upper sheet 51 or that lower sheet 52 while being reflected.

Then, light is diffused toward the external at the area where the diffusing section P1 is formed on the upper sheet 51 or the lower sheet 52, and the diffused light reaches the lower surfaces of the keytops 10 through the rubber domes 35. This light only passes through portions of the letters 12 formed in the keytops 10 as shown in FIG. 16 and does not pass through the other portions, and therefore the situation is obtained where only the portions of the letters 12 are seen as being luminous from above the keyboard apparatus 1G. Consequently, the keys are visible even in the darkness.

In the present embodiment, as shown in FIG. 15, the membrane board 50, the rubber dome sheet 30, and the holding plate 20 are stacked from the lower side, and these are accommodated in the accommodation space 61 of the housing 60. Furthermore, the peripheral edge of the holding plate 20 is engaged with the turned back portion 62 of the housing 60, thereby holding the rubber dome sheet 30 and the membrane board 50 between the holding plate 20 and the housing 60.

Thus, according to the present embodiment, the upper sheet 51 or the lower sheet 52 involving light guiding ability is located at the nearer side to the keytops 10 than the conventional technique, and the light diffused from the upper sheet 51 is therefore guided into the keytops 10 without passing through the membrane board 50 and the holding plate 20, thereby improving the brightness of illumination in the keytops 10.

Notably, in the conventional keyboard apparatus, since the holding plate is located below the membrane board, the membrane board is required to be provided therein with penetrating holes through which projections provided on the holding plate are to penetrate. Moreover, the light guide plate (including a plate body which has a light guiding ability) is stacked below the holding plate in general, because if such penetrating holes are formed in the light guide plate, then light is leaked at an end face of each penetrating hole.

In contrast to this, according to the present embodiment, the holding plate 20 is located above the upper sheet 51 or the lower sheet 52 involving light guiding ability, and the upper sheet 51 or the lower sheet 52 involving light guiding ability is therefore not required to be formed therein with holes through which the projections 21 and 22 of the holding plate 20 penetrate, thereby preventing the decreasing of the brightness of illumination in the keytops 10.

In addition, by using a light guiding material as the upper sheet 51 or the lower sheet 52, the entire thickness of the keyboard apparatus 1G may be reduced.

The keyboard apparatus 1G according to the present embodiment is produced by performing the following steps of: forming a circuit pattern, which includes the first contact point 511, on the upper sheet 51 having a light guiding ability for guiding light emitted from a light source to the keytops 10; forming the diffusing section P1 on a part of one main surface of the upper sheet 51, if needed; stacking the lower sheet 52 via the spacer 53 on the other main surface of the upper sheet 51 wherein the lower sheet 52 is formed thereon with the second contact point 521 capable of contacting with the first contact point 511; and causing the holding plate 20 to hold the upper sheet 51, the spacer 53, and the lower sheet 52 such that the holding plate 20 is located at the nearer side to the keytops 10 than the upper sheet 51, wherein the holding plate 20 also holds each keytop 10 at a position facing the first contact point 511 and the second contact point 521 such that the keytop 10 is capable of approaching and leaving the upper sheet 51. Note that the step of forming a circuit pattern on the upper sheet 51, the step of forming the diffusing section P1 on the upper sheet 51, and the step of stacking the lower sheet 52 via the spacer 53 may be performed in an arbitrary order.

### «Eighth Embodiment»

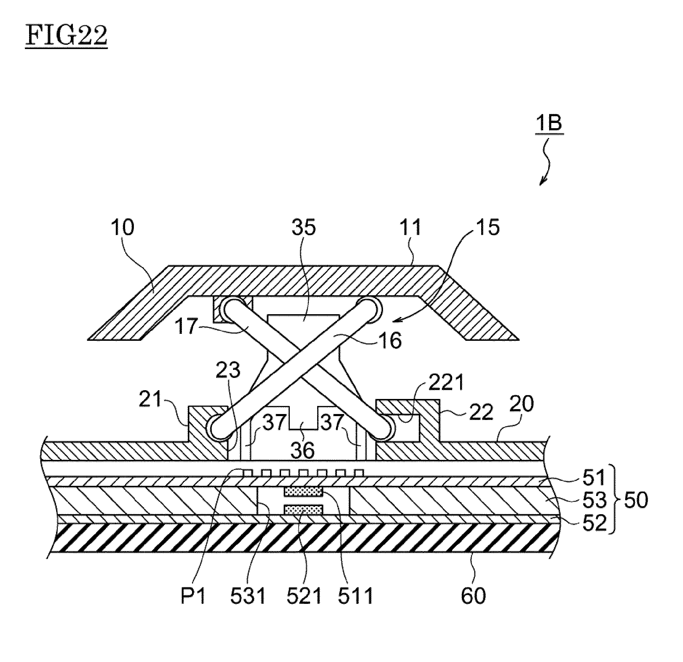

FIG. 22 is an enlarged cross-sectional view illustrating a keyboard apparatus according to the eighth embodiment of the present invention.

The present embodiment differs from the seventh embodiment in the point that the present embodiment does not comprise the sheet main body 31 of the rubber dome sheet 30 in the seventh embodiment and that the rubber domes 35 are directly attached to the membrane board 50, but the other configuration is similar to the seventh embodiment. Hereinafter, the difference from the seventh embodiment with respect to a keyboard apparatus 1H in the eighth embodiment will mainly be described, and portions having similar configuration as the seventh embodiment will be omitted to be described by denoting the same reference numerals.

In the present embodiment, as shown in FIG. 22, the rubber domes 35 are attached with their leg portions 37 directly to the membrane board 50 via transparent adhesive. This adhesive has a refractive index not less than the refractive index of the upper sheet 51 having light guiding ability and not more than the refractive index of the rubber dome 35, and examples of such adhesive include an adhesive comprised of silicone-based resin or urethane-based resin, for example.

Here, urethane-based resin constituting the upper sheet 51 having light guiding ability has a refractive index of about 1.4 to 1.5. On the other hand, silicone-based resin constituting the rubber dome 35 has a refractive index of about 4.0 to 4.5, which is thus higher than that of the upper sheet 51 having light guiding ability.

In general, if members having different refractive indices adhere with each other, then light propagates from the member with lower refractive index to the member with higher refractive index. In addition, light within the member with higher refractive index is totally reflected or refracted at the interface with the material having lower refractive index, and therefore light having propagated into the member with higher refractive index is prevented from returning to the member with lower refractive index. Therefore, in the present embodiment, light having propagated in the upper sheet 51 having light guiding ability positively progresses into the rubber domes 35 via the positions where the leg portions of the rubber domes 35 are attached.

Likewise the seventh embodiment, according to the present embodiment, the upper sheet 51 having light guiding ability is located at the nearer side to the keytops 10 than the conventional technique, and the light diffused from the upper sheet 51 is therefore guided into the keytops 10 without passing through the membrane board 50 and the holding plate 20, thereby improving the brightness of illumination in the keytops 10.

Moreover, likewise the seventh embodiment, according to the present embodiment, the holding plate 20 is located at the nearer side to the keytops 10 than the upper sheet 51 having light guiding ability, and the membrane board 50 is therefore not required to be formed therein with holes through which the projections 21 and 22 of the holding plate 20 penetrate, thereby preventing the brightness of illumination in the keytops 10 from deteriorating.

Furthermore, as described above, according to the present embodiment, light is directly introduced from the upper sheet 51 having light guiding ability to the rubber domes 35 utilizing the difference in refractive indices in addition to the emission from the diffusing section P1, thereby improving the brightness of illumination in the keytops 10. In addition, the present embodiment needs not the sheet main body 31 of the rubber dome sheet 30 as described with reference to the seventh embodiment, thereby allowing to reduce the entire thickness of the keyboard apparatus 1H.

Moreover, according to the present embodiment, the rubber domes 35 are attached to the upper sheet 51 having light guiding ability by means of adhesive, which has a refractive index not less than the refractive index of the upper sheet 51 and not more than the refractive index of the rubber domes 35, thereby not interrupting the propagation of light progressing from the upper sheet 51 to the rubber domes 35.

### «Ninth Embodiment»

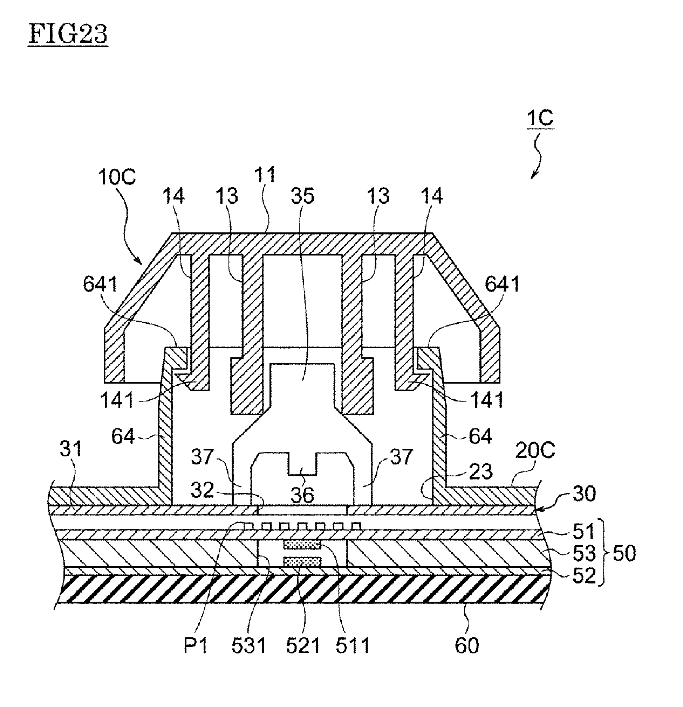

FIG. 23 is an enlarged cross-sectional view illustrating a keyboard apparatus according to the ninth embodiment of the present invention.

The present embodiment differs from the seventh embodiment in the point that the configuration of the keytops and the holding plate is different, but the other configuration is similar to the seventh embodiment. Hereinafter, the difference from the seventh embodiment with respect to a keyboard apparatus 1J in the ninth embodiment will only be described, and portions having similar configuration as the seventh embodiment will be omitted to be described by denoting the same reference numerals.

The keyboard apparatus 1J according to the present embodiment is a keyboard to be used for a desktop type personal computer.

From the lower surface of each keytop 10C of this keyboard apparatus 1J, contacting ribs 13 and engaging ribs 14 project downward. The contacting ribs 13 are contacting with the rubber dome 35. The engaging ribs 14 are engaged with a base 64 of a holding plate 20C.

Although not particularly illustrated, likewise the seventh embodiment, letters 12 are applied to the key surface 11 of each keytop 10C also in the present embodiment, and the letters 12 areas of the key surface 11 are transparent while the other areas are opaque.

As substitute for the first and the second projections 21 and 22 of the seventh embodiment, the base 64 is formed on the holding plate 20C. The peripheral edge of an upper opening of this base 64 is formed thereon with projections 641 projecting toward the inside, with which engaging clicks 141 of the engaging ribs 14 are engaged.

If the keytop 10C is pressed down, then the rubber dome 35 is deformed and the raised portion 36 presses the contact points 511 and 521 of the membrane board 50. Subsequently, if the pressing of the keytop 10C is released, then the rubber dome 35 is restored into the initial form, thereby causing the keytop 10C to be lifted up. At this time, the base 64 and the engaging ribs 14 are engaged with one another, and the keytop 10C is thus prevented from dropping off from the keyboard apparatus 1J.

Likewise the seventh embodiment, according to the present embodiment, the upper sheet 51 or the lower sheet 52 having light guiding ability is located at the nearer side to the keytops 10C than the conventional technique, and the light diffused from the upper sheet 51 is therefore guided into the keytops 10C without passing through the membrane board 50 and the holding plate 20C, thereby improving the brightness of illumination in the keytops 10C.

Moreover, likewise the seventh embodiment, according to the present embodiment, the holding plate 20C is located at the nearer side to the keytops 10C than the upper sheet 51 or the lower sheet 52 having light guiding ability, and the upper sheet 51 or the lower sheet 52 is therefore not required to be formed therein with holes through which the bases 64 of the holding plate 20C penetrate, thereby preventing the brightness of illumination in the keytops 10C from deteriorating.

It is to be noted that the embodiments as explained hereinbefore are described to facilitate understanding of the present invention and are not described to limit the present invention. Therefore, it is intended that the elements disclosed in the above embodiments include all design changes and equivalents to fall within the technical scope of the present invention.

For example, also in the keyboard apparatus 1J according to the ninth embodiment, the rubber domes are directly attached to the membrane board 50 using adhesive comprised of transparent silicone-based resin, as described with reference to the eighth embodiment.

Note that the membrane board 50 in the present embodiment represents one example of the circuit board in the present invention, the upper sheet 51 in the present embodiment represents one example of the first sheet in the present invention, the lower sheet 52 in the present embodiment represents one example of the second sheet in the present invention, and the rubber domes 35 in the present embodiment represent one example of the biasing member in the present invention.

As described hereinafter, the advantageous effects of the present invention were confirmed by samples as more specifically embodying the present invention.

### «Example 4»

Example 4 using the following Sample 41 and Sample 42 is for confirming an advantageous effect that the brightness of illumination in the keyboard apparatus according to the above-described embodiments is maintained.

### <Sample 41>

Sample 41 was prepared as being similar configuration of the keyboard apparatus as the seventh embodiment.

In this Sample 41, a PET film of 100 µm thickness (HS available from Teijin DuPont Films Japan Limited) was used for the sheet main body of the rubber dome sheet, and transparent rubber domes (available from Shin-Etsu Polymer Co., Ltd.) were attached to this PET film by adhesive (LCR0628A available from TOAGOSEI CO., LTD.).

For the upper sheet of the membrane board, a urethane sheet of 200 µm thickness (M-FILM-NY02-A available from Nihon Matai Co., Ltd.) was used. The diffusing section was formed on the upper surface of this urethane sheet by screen printing white color ink (4700M White available from JUJO CHEMICAL CO., LTD.).

For the lower sheet and the spacer of the membrane board, a white colored PET film of 100 µm thickness (FW2 available from Teijin DuPont Films Japan Limited)and a PET film of 100 µm thickness (HS available from Teijin DuPont Films Japan Limited) were used.

The first and second contact points were formed on the upper sheet and the lower sheet, respectively, by screen printing conductive paste (DX-351H-30 available from TOYOBO CO., LTD.) containing silver filler.

This membrane board was mounted thereon with a side emitting type LED (CL-432F available from CITIZEN ELECTRONICS CO., LTD.) with 2.8 mm length, 1.0 mm width, and 0.6 mm height using conductive adhesive (3302B available from ThreeBond Co., Ltd.).

Note that, for this Sample 41, at the time of mounting the LED to the membrane board, the lower sheet was formed thereon with a circuit for mounting the LED, and the upper sheet and the spacer were formed therein with penetrating holes for being inserted with the LED mounted on the lower sheet.

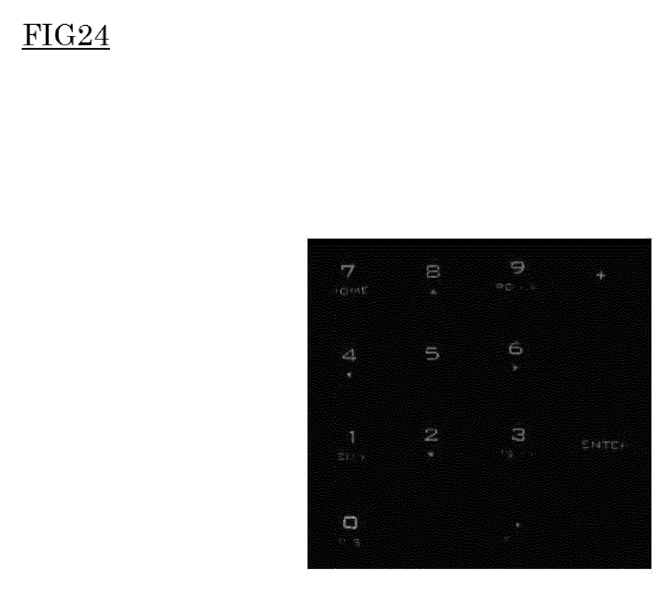

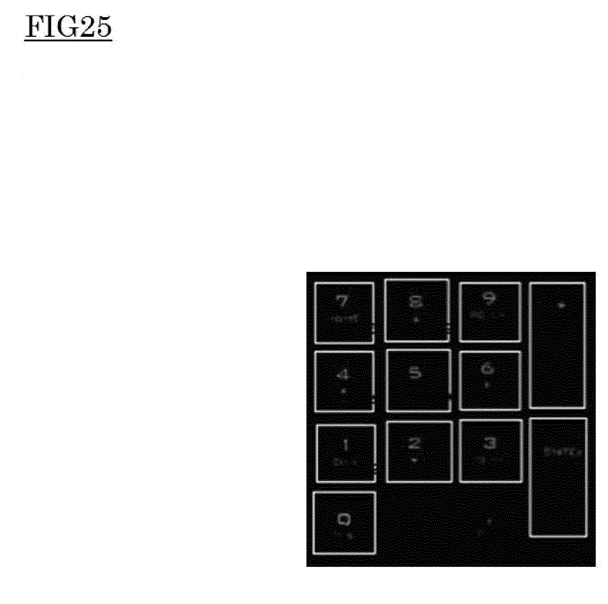

The LED of Sample 41 was applied thereto with electrical current of 100 mA using a low voltage current generator power supply (R6142 available from ADVANTEST CORPORATION), and the brightness distribution of illumination within the keytops was monitored using a two-dimensional color brightness meter (CA-2000 available from Konica Minolta Sensing, Inc.). The brightness distribution monitoring result at that time is shown in FIG. 24. In addition, a number of spots as shown in FIG. 25 were set for respective keys, and the average value of the brightness of all the spots was calculated. The calculation result is presented in Table 5. In addition, as Sample 41-1, the material used as the upper sheet in Sample 41 was used as the lower sheet, the material used as the lower sheet in Sample 41 was used as the upper sheet, and the material used as the spacer in Sample 41 was used as the spacer. The sample was prepared in the similar manner as Sample 41, and the average value of the brightness of the spots as shown in FIG. 25 was calculated. The calculation result is presented in Table 5. Note that frames shown by solid lines in FIG. 25 are those spots.

**[Table 5]**

| | Sample 41 (Example) | Sample 41-1 (Example) | Sample 42 (Comparative Example) |
|---|---|---|---|
| Brightness average value [cd/m²] | 52.8 | 47.5 | 26.2 |

### <Sample 42>

Sample 42 as a comparative example was prepared as being similar configuration as Sample 41 except for changing the order of stacking respective members. More specifically, the light guide plate, the holding plate, the membrane board, and the rubber dome sheet were stacked in this order from the lower side (the stacking order described in the above-mentioned Japanese Published Patent Application No. 2002-260478). In Sample 42, for the light guide plate, a urethane sheet of 200 µm thickness (M-FILM-NY02-A available from Nihon Matai Co., Ltd.) was used. In addition, the diffusing section was formed on the lower surface of this urethane sheet by screen printing white color ink (4700M White available from JUJO CHEMICAL CO., LTD.).

Along with this change in stacking order, a reflecting sheet comprised of a white colored PET film of 100 µm thickness (FW2 available from Teijin DuPont Films Japan Limited) was added below the light guide plate. Moreover, the upper sheet of the membrane board was substituted by a transparent PET film (HS available from Teijin DuPont Films Japan Limited) similar as the lower sheet and the spacer. Furthermore, the rubber dome sheet and the membrane board were formed therein with penetrating holes through which the first and the second projections of the holding plate penetrate.

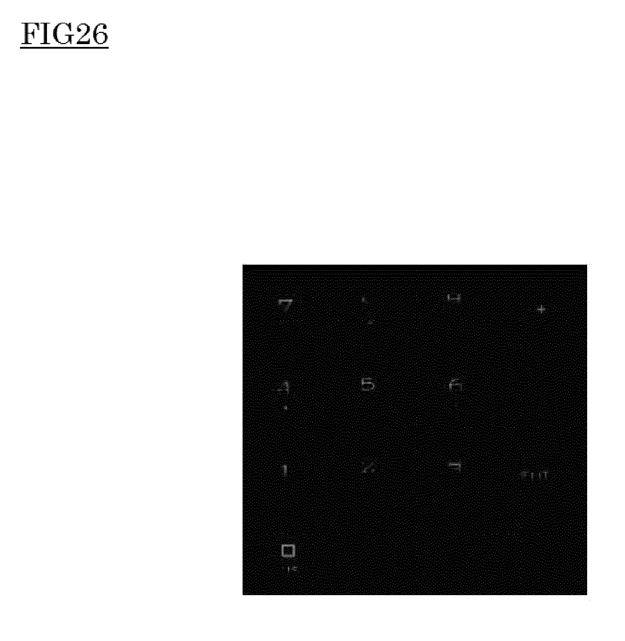

For this Sample 42, the LED was caused to light in the same manner as Sample 41, and the brightness distribution of illumination within the keytops was monitored. The brightness distribution monitoring result at that time is shown in FIG. 26. In addition, a number of spots similar as Sample 41 were set for respective keys, and the average value of the brightness of all the spots was calculated. The calculation result is presented in Table 5.

### <Consideration>

Although each of Sample 41 and Sample 41-1 was merely altered in the stacking order of respective members compared to Sample 42, the brightness of illumination within the keytops is totally improved as shown in FIG. 24 and FIG. 26, and the brightness is increased roughly twice as shown in Table 5. Moreover, in Sample 41 and Sample 41-1, the light guide plate (200 µm thickness) and the reflecting sheet (100 µm thickness) are not required, and the thickness of the board is thus enabled to be reduced. As a result, the entire thickness of the keyboard apparatus may be reduced.

From this, by locating the holding plate at the nearer side to the keytops than the upper sheet or the lower sheet having light guiding ability, the brightness of illumination within the keytops may be improved while reducing the thickness of the keyboard apparatus.

### <<Example 5>>

Thereafter, each on-load of the keyboard apparatuses according to the above-described embodiments was confirmed by Sample 53 to Sample 59 as follows. On -load was measured as a load at the time the circuit had just been conductive as the rubber dome was pressed down using a pusher with a pressing face of ϕ3 mm. Note that the radius of the pusher used in the present example was determined depending on the dimension of the rubber dome. In the present example, the pusher was selected as being larger than the outer shape dimension of the rubber dome upper portion and having a smooth pushing face.

### <Sample 53>

Sample 53 was prepared as being similar configuration of the keyboard apparatus as Sample 41 except for using a urethane sheet of 150 µm thickness (M-FILM-NY02-A available from Nihon Matai Co., Ltd.) as the upper sheet. The configuration of this upper sheet of Sample 53 is presented in Table 6.

**[Table 6]**

| | | Sample 53 (Example) | Sample 54 (Example) | Sample 55 (Example) | Sample 56 (Example) | Sample 57 (Comparative Example) | Sample 58 (Reference Example) | Sample 59 (Reference Example) |
|---|---|---|---|---|---|---|---|---|
| Upper Sheet | Material | Urethane | | Silicone | | PET | Polycarbonate | Soft Acrylic |
| | Thickness [µm] | 150 | 200 | 150 | 200 | 100 | 130 | 200 |

For this Sample 53, the load when the contact points of the membrane board had contacted with each other to cause the circuit to be conductive (on-load) was measured. The measurement result is presented in Table 7.

**[Table 7]**

| | Sample 53 (Example) | Sample 54 (Example) | Sample 55 (Example) | Sample 56 (Example) | Sample 57 (Comparative Example) | Sample 58 (Reference Example) | Sample 59 (Reference Example) |
|---|---|---|---|---|---|---|---|
| On-Load [N] | 0.350 | 0.366 | 0.360 | 0.368 | 0.351 | 0.551 | 1.260 |

### <Sample 54>

Sample 54 was prepared as being similar configuration of the keyboard apparatus as Sample 41 except for using a urethane sheet of 200 µm thickness (M-FILM-NY02-A available from Nihon Matai Co., Ltd.) as the upper sheet. The configuration of this upper sheet of Sample 54 is presented in the above Table 6.

For this Sample 54, the on-load was measured in the similar manner as Sample 53. The measurement result is presented in the above Table 7.

### <Sample 55>

Sample 55 was prepared as being similar configuration of the keyboard apparatus as Sample 41 except for using a silicone sheet of 150 µm thickness (Light Guide Film available from Fuji Polymer Industries Co., Ltd.) as the upper sheet. The configuration of this upper sheet of Sample 55 is presented in the above Table 6.

For this Sample 55, the on-load was measured in the similar manner as Sample 53. The measurement result is presented in the above Table 7.

### <Sample 56>

Sample 56 was prepared as being similar configuration of the keyboard apparatus as Sample 41 except for using a silicone sheet of 200 µm thickness (Light Guide Film available from Fuji Polymer Industries Co., Ltd.) as the upper sheet. The configuration of this upper sheet of Sample 56 is presented in the above Table 6.

For this Sample 56, the on-load was measured in the similar manner as Sample 53. The measurement result is presented in the above Table 7.

### <Sample 57>

Sample 57 was prepared as being similar configuration of the keyboard apparatus as Sample 41 except for using a transparent PET film of 100 µm thickness (HS available from Teijin DuPont Films Japan Limited) as the upper sheet of the membrane board. The configuration of this Sample 57 is presented in the above Table 6.

For this Sample 57, the on-load was measured in the similar manner as Sample 53. The measurement result is presented in the above Table 7.

### <Sample 58>

Sample 58 was prepared as being similar configuration of the keyboard apparatus as Sample 41 except for using a polycarbonate sheet of 130 µm thickness (LC1500 available from Idemitsu Kosan Co., Ltd.) as the upper sheet. The configuration of this upper sheet of Sample 58 is presented in the above Table 6.

For this Sample 58, the on-load was measured in the similar manner as Sample 53. The measurement result is presented in the above Table 7.

### <Sample 59>

Sample 59 was prepared as being similar configuration of the keyboard apparatus as Sample 41 except for using a soft acrylic sheet of 200 µm thickness (SA-00-R available from CRD Limited Company) as the upper sheet. The configuration of this upper sheet of Sample 59 is presented in the above Table 6.

For this Sample 59, the on-load was measured in the similar manner as Sample 53. The measurement result is presented in the above Table 7.

### <Consideration>

Samples 53 to 56 using flexible sheets (urethane sheet, silicone sheet) having light guiding ability as the upper sheets represent similar values as that of usual Sample 57 using PET as the upper sheet. In addition, Samples 58 and 59 using rigid sheets (polycarbonate, soft acrylic) as the upper sheets represent larger on-load compared to Samples 53 to 57.

Considering the above, it may be understood that, by employing flexible urethane sheet or silicone sheet as the upper sheet, on-load may come to be within an adequate range of value.

### «Example 6»

The following Example 6 using Sample 60 and Sample 61 is for confirming an advantageous effect that the brightness of illumination in the keyboard apparatuses according to the above-described embodiments is maintained by not providing penetrating holes in the upper sheet or the lower sheet having light guiding ability.

### <Sample 60>

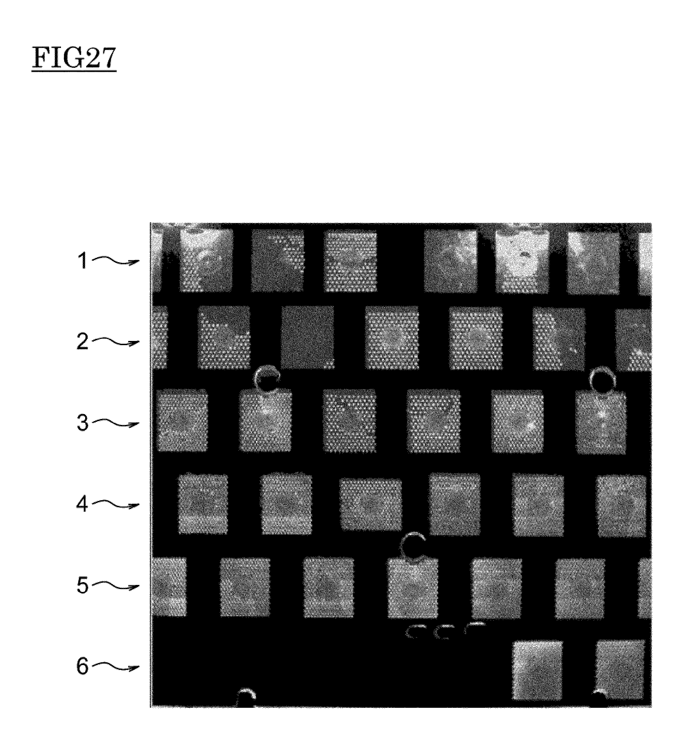

Sample 60 was prepared as being similar configuration of the keyboard apparatus as Sample 41. FIG. 27 illustrates the brightness distribution monitoring result of keytops of Sample 60 obtained in a similar manner as Example 4. In addition, the brightness (cd/m²) of each row in Sample 60 is presented in Table 8.

### <Sample 61>

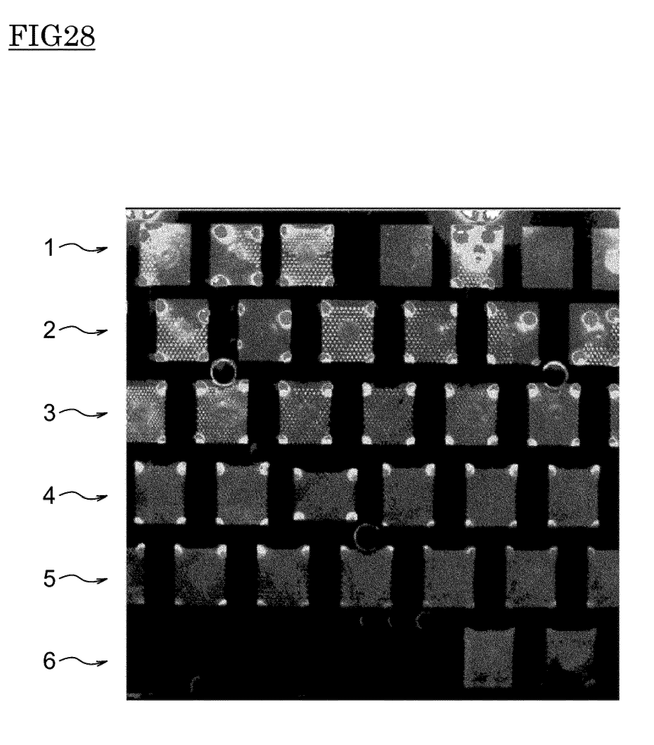

Sample 61 is a comparative sample for Sample 60, wherein holes of ϕ2.7 mm were bored at four corners of each diffusing section provided within the upper sheet. The diffusing sections are each rectangular area of 14.5 mm length and 12.0 mm width, and the spacing between adjacent two diffusing areas is 3.15 mm. FIG. 28 illustrates the brightness distribution monitoring result of keytops of Sample 61 obtained in a similar manner as Example 4. In addition, the brightness (cd/m²) of each row in Sample 61 is represented in Table 8.

In Samples 60 and 61, plural light sources are arranged along the upper side of the uppermost keytops, and the distance between the uppermost keytops and the light sources is 3.15 mm.

**[Table 8]**

| Row No. | 1 | 2 | 3 | 4 | 5 | 6 |
|---|---|---|---|---|---|---|
| Brightness of Sample 60 (cd/m²) | 4.34 | 3.06 | 3.64 | 3.45 | 3.54 | 3.36 |
| Brightness of Sample 61 (cd/m²) | 7.10 | 5.69 | 4.80 | 2.08 | 1.51 | 1.35 |

### <Consideration>

As shown in FIG. 27 and FIG. 28 and Table 8, the brightness distribution of Sample 60 without holes is more uniform than that of Sample 61 with holes. It may be understood that, although Sample 61 as a comparative example presents higher brightness within keytops of the uppermost row (row No. is one) near the light sources, the brightness significantly decreases as the distance from the light sources increases. This is due to that end portions of the holes scatter light thereby to attenuate light while light propagates from the light source to a distance. In contrast, Sample 60 according to the present embodiment is not required to be provided with holes in the membrane board, by locating the holding plate at the nearer side to the keytops than the upper sheet or the lower sheet having light guiding ability. Accordingly, undue light diffusion by holes is avoided, and light is thus prevented from attenuating even far from the light source, thereby allowing each keytop to be uniformly illuminated.

As described hereinbefore, according to the present embodiment, the holding plate is located at the nearer side to the keytops than the upper sheet or the lower sheet having light guiding ability, thereby to render the holes of the upper sheet 51 or the lower sheet 52 unnecessary for being penetrated with the projections 21 and 22 of the holding plate 20. Accordingly, attenuation of light due to diffusing at end surfaces of holes is prevented, and the brightness of illumination within the keytops is also prevented from deteriorating.

### Description of Reference Numerals

- 1, 1B, 1C, 1D, 1E, 1F,1G,1H,1J: keyboard apparatus
- 10, 10C: keytop
11 key surface
12 letters
- 15: link mechanism
- 20, 20C: holding plate
- 30: rubber dome sheet
31 sheet main body
35 rubber dome (biasing member)
36 raised portion
- 40: light guide plate
- 50: membrane board (circuit board)
51 upper sheet (first sheet)
511 first contact point
52 lower sheet (second sheet)
521 second contact point
53 spacer
54 LED
60 housing

## Claims

1. A keyboard apparatus comprising:
a circuit board having a contact point;
a holding plate holding a keytop such that the keytop is capable of approaching and leaving the circuit board at a position facing the contact point;
a light guide plate having light guiding ability and guiding light to the keytop; and
a biasing member having light guiding ability and biasing the keytop in a leaving direction from the circuit board, wherein
the light guide plate is located between the holding plate and the circuit board and at a nearer side to the keytop than the circuit board.

2. The keyboard apparatus as recited in claim 1, wherein
the circuit board has:
a first sheet formed thereon with a first contact point, the light guiding plate being directly stacked on the first sheet;
a second sheet formed thereon with a second contact point facing the first contact point via a predetermined spacing; and
a spacer stacked between the first sheet and the second sheet, and wherein
the first sheet is comprised of white colored polyethylene terephthalate or white colored polyethylene naphthalate.

3. The keyboard apparatus as recited in claim 1, wherein
the circuit board has a roughened area where at least a part of a main surface facing the light guide plate is roughened.

4. The keyboard apparatus as recited in claim 3, wherein
the roughened area is formed on at least a part of an area facing the biasing member.

5. The keyboard apparatus as recited in claim 3 or 4, wherein
the roughened area is roughened by a dot pattern printed using transparent or white color ink.

6. The keyboard apparatus as recited in claim 3 or 4, wherein
the roughened area is roughened by a mat pattern printed using white color ink.

7. The keyboard apparatus as recited in either one of claims 1 to 6, wherein
the light guide plate is comprised of a material having Young's modulus of 1000 [MPa] or less.

8. The keyboard apparatus as recited in claim 7, wherein
the light guide plate is comprised of urethane-based resin or silicone-based resin.

9. The keyboard apparatus as recited in either one of claims 1 to 8, wherein
the biasing member is directly attached to the light guide plate.

10. The keyboard apparatus as recited in claim 9, wherein
refractive index of the biasing member is relatively higher than refractive index of the light guide plate.

11. The keyboard apparatus as recited in claim 10, wherein
the biasing member is comprised of silicone-based resin.

12. The keyboard apparatus as recited in claim 11, wherein
the biasing member is attached to the light guide plate by an adhesive having a refractive index not less than refractive index of the light guide plate and not more than refractive index of the biasing member.

13. The keyboard apparatus as recited in either one of claims 1 to 12, wherein
the holding plate holds the keytop via a link mechanism.

14. A keyboard apparatus comprising:
a circuit board having a first sheet of which one main surface is formed thereon with a first contact point, a second sheet formed thereon with a second contact point facing the first contact point via a predetermined spacing, and a spacer stacked between the first sheet and the second sheet;
a holding plate stacked on other main surface of the first sheet and holding a keytop such that the keytop is capable of approaching and leaving the circuit board at a position facing the contact points;
a biasing member having light guiding ability and biasing the keytop in a leaving direction from the circuit board; and
a light source provided to the circuit board for lighting the keytop, wherein
the first sheet or the second sheet involves light guiding ability for guiding light emitted from the light source to the keytop from a light introducing portion.

15. The keyboard apparatus as recited in claim 14, wherein
the first sheet is comprised of a material involving light guiding ability for guiding light emitted from the light source to the keytop, and at least one of the second sheet and the spacer is comprised of white colored polyethylene terephthalate or white colored polyethylene naphthalate.

16. The keyboard apparatus as recited in claim 15, wherein
the first sheet involving the light guiding ability is comprised of a material having Young's modulus of 1000 [MPa] or less.

17. The keyboard apparatus as recited in claim 16, wherein
the first sheet or the second sheet involving the light guiding ability is comprised of urethane-based resin or silicone-based resin.

18. The keyboard apparatus as recited in either one of claims 15 to 17, wherein
the biasing member is directly attached to the first sheet.

19. The keyboard apparatus as recited in claim 18, wherein
refractive index of the biasing member is relatively higher than refractive index of the first sheet.

20. The keyboard apparatus as recited in claim 14, wherein
the second sheet is comprised of a material involving light guiding ability for guiding light emitted from the light source to the keytop, and the first sheet and the spacer are comprised of transparent polyethylene terephthalate or transparent polyethylene naphthalate.
